(19) Europäisches Patentamt
European Patent Office
Office européen des brevets

(11) **EP 3 367 059 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **17158391.7**

(22) Anmeldetag: **28.02.2017**

(51) Internationale Patentklassifikation (IPC):
**G01C 17/38** (2006.01)

(52) Gemeinsame Patentklassifikation (CPC):
**G01C 17/38**

(54) **OPTOELEKTRONISCHES MESSGERÄT MIT MAGNETKOMPASS UND KOMPENSATIONSFUNKTIONALITÄT**

OPTOELECTRONIC MEASURING DEVICE WITH MAGNETIC COMPASS AND COMPENSATION FUNCTIONALITY

APPAREIL DE MESURE OPTOELECTRIQUE DOTE D'UN COMPAS MAGNETIQUE ET FONCTIONNALITE DE COMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.08.2018 Patentblatt 2018/35**

(73) Patentinhaber: **Safran Vectronix AG**
**9435 Heerbrugg (CH)**

(72) Erfinder: **GNEPF, Silvio**
**9435 Heerbrugg (CH)**

(74) Vertreter: **Kaminski Harmann**
**Patentanwälte AG**
**Landstrasse 124**
**9490 Vaduz (LI)**

(56) Entgegenhaltungen:
**EP-A1- 2 645 059      WO-A2-2004/099715**
**US-B1- 6 401 047**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein optoelektronisches Messgerät, insbesondere Zielgerät, mit einem elektronischen Magnetkompass zum Bestimmen der azimutalen Ausrichtung des Messgeräts sowie ein Verfahren zum Bestimmen einer azimutalen Ausrichtung eines solchen optoelektronischen Messgerätes. Insbesondere betrifft die Erfindung eine automatische Kompensation von gerätefesten hart- und weichmagnetischen Störeinflüssen aufgrund unterschiedlicher Betriebszustände des Messgerätes. Dabei wird erfindungsgemäss aus jeweils drei magnetischen Zuständen ein vierter extrapoliert, um eine zusätzliche Kompensationsprozedur zu vermeiden.

Derartige Messgeräte werden, beispielsweise bei der Objektaufnahme und Datensammlung für Geographische Informationssysteme (GIS), zum Bestimmen von Koordinaten entfernter Objekte eingesetzt. Solche Messgeräte können auch als tragbare Zielgeräte ausgebildet sein, die insbesondere bei Koordinatenbestimmungen militärischer Zielobjekte Verwendung finden, wie z. B. in der US 7,325,320 B2 beschrieben.

Ein derartiges Bestimmen von Zielkoordinaten erfordert die Relativkoordinaten zwischen dem Messgerät und dem Zielobjekt. Für diesen Zweck wird das Zielgerät auf das Zielobjekt ausgerichtet und dann die azimutale und die zenitale Ausrichtung des Zielgeräts relativ zur Erde bestimmt. Die bestimmten Winkelwerte können dann zusammen mit jeweils einem typischen Genauigkeitswert an einer Datenschnittstelle des Zielgeräts zur Übermittlung an eine Feuerleiteinrichtung bereitgestellt werden. Von der Feuerleiteinrichtung kann dann über eine Feuereinheit Feuerwirkung in ein den übermittelten Zielkoordinaten zugeordnetes Gebiet eingebracht werden.

In Bezug auf die erzielbare Genauigkeit der zu bestimmenden Zielkoordinaten ist der Magnetkompass die kritische Komponente. Aufgrund des übermittelten Genauigkeitswerts der azimutalen Ausrichtung lässt sich einerseits der Effekt einer einzubringenden Feuerwirkung auf das Zielobjekt und andererseits die Wahrscheinlichkeit von Kollateralschäden beurteilen. Bei einer wesentlichen Abweichung zwischen dem effektiven und dem vorgegebenen typischen Genauigkeitswert kann diese Beurteilung falsch sein.

Auch mit einem elektronischen Magnetkompass ist beim Bestimmen azimutaler Ausrichtungen nach wie vor grosse Vorsicht geboten, obwohl die Komponenten des Magnet- und Gravitationsfelds als solches mit ausreichender Gerätegenauigkeit messbar sind. Auch lässt sich heute, wie aus der US 4 949 089 bekannt, die Missweisung des Erdmagnetfelds von der geographischen Nordrichtung mittels der in militärischen GPS-Empfängern implementierten "Magnetic-Variation-Compensation" praktisch automatisch berücksichtigen. Da jedoch das gemessene Magnetfeld neben dem Erdmagnetfeld, dem Träger der Nordrichtungsinformation, in der Regel diesem überlagerte, magnetische Störfelder umfasst, kann die azimutale Ausrichtung relativ zur geographischen Nordrichtung dennoch oft nur mit einer sehr beschränkten Genauigkeit und Zuverlässigkeit, die ein Vielfaches der reinen Gerätegenauigkeit sein kann, bestimmt werden.

Diese magnetischen Störfelder umfassen dem Messort zugeordnete, sogenannte ortsfeste Störfelder und sogenannte gerätefeste Störfelder, die auf elektrische Ströme sowie hart- und weichmagnetische Materialien des Geräts zurückgehen, in das der Magnetkompass eingebaut ist.

Aus dem Stand der Technik ist eine Vielzahl von verschiedenen

Verfahren bekannt, die es ermöglichen, magnetische Störeinflüsse bei Magnetkompassen zu kompensieren. So zeigen die US 6,401,047 B1 und die WO 2004/099715 A2 verschiedene Kompensationsverfahren für in Fahrzeugen installierte Kompasssysteme, und die EP 2 645 059 A1 ein Kompensationsverfahren für einen Kompass eines faltbaren Mobiltelefons. Wie beispielsweise aus der DE 196 09 762 C1 bekannt, lassen sich gerätefeste Störfelder eines Geräts mit einem elektronischen Magnetkompass, der Sensoren zum dreidimensionalen Messen eines Magnet- und Gravitationsfelds aufweist, beim Bestimmen azimutaler Ausrichtungen des Geräts mittels einer Vektorgleichung arithmetisch kompensieren. Die Parameter der Vektorgleichung müssen vorher mittels eines Optimierungsverfahrens bestimmt werden. Dieses Optimierungsverfahren basiert auf Werten einer mehr oder weniger starr vorgegebenen Abfolge von Messungen des Magnet- und Gravitationsfelds an einem Messort. Dabei wird das Gerät bei jeder dieser Messungen jeweils unterschiedlich im Raum ausgerichtet. Auf diese Weise können jedoch ortsfeste magnetische Störfelder weder kompensiert noch am Messort detektiert werden.

Ein gattungsgemässes optoelektronisches Messgerät mit einem Magnetkompass und einer Kompensationsfunktionalität für diesen wird beispielsweise in der US 2015/0012234 A1 beschrieben.

Um magnetische Störeinflüsse zumindest zu reduzieren oder vorzugsweise gänzlich zu eliminieren, ist eine Kompensation unumgänglich. Dabei existieren für unterschiedliche Störquellen unterschiedliche Kompensationsmöglichkeiten. Verändern sich die magnetischen Gegebenheiten eines Gerätes mit eingebautem magnetischem Kompass nach bereits erfolgter Kompensation, so muss zwangsläufig eine neue Kompensation durchgeführt werden.

Oft tritt aber das Problem auf, dass der Anwender die eigentlich nötige Kompensation nicht durchführt, wodurch die Genauigkeit des Kompasses reduziert ist. Das Unterlassen der erneuten Kompensation resultiert dabei entweder aus Zeitmangel, aus der Unkenntnis des jeweiligen Anwenders, dass eine weitere Kompensation nötig ist, oder - da das Verfahren häufig als umständlich angesehen wird - auf Bequemlichkeit. Um die Zuverlässigkeit der Messungen auch unter Zeitdruck oder bei wenige erfahrenen Benutzern zu gewährleisten, wäre es daher vorteilhaft, wenn die Zahl der auszuführenden Kompensationen reduziert werden könnte, bzw. wenn der Anwender nach einer Initialkompensation keine weiteren Kompensationen mehr durchführen müsste, nur weil der magnetische Zustand des Gerätes verändert wurde.

In der EP 3 249 353 A1 wird eine Kompensationsfunktionalität für einen digitalen Magnetkompass (DMC) eines gattungsgemässen optoelektronischen Messgerätes mit mehreren hartmagnetischen Betriebszuständen beschrieben. Wird das Messgerät aber nicht, bzw. nicht nur, freihändig verwendet, sondern ist auf einem weiteren Gerät montiert bzw. montierbar, dass ebenfalls ein gerätefestes Störfeld erzeugt oder sogar je nach Zustand weichmagnetischen Änderungen unterliegt, die den Magnetkompass beeinflussen, ist das in der EP 3 249 353 A1 beschriebene Verfahren nur noch bedingt anwendbar.

Hat ein Benutzer ein solches Messgerät, das in mehreren verschiedenen Betriebszuständen verwendet werden kann, also beispielsweise einem Zustand zur visuellen Beobachtung und einem Zustand zur Beobachtung im infraroten Licht, und soll das Gerät zusätzlich unabhängig von diesen Betriebszuständen auf zwei verschiedene Arten verwendet werden, nämlich zum einen freihändig und zum anderen montiert auf einem anderen Gerät, muss der Benutzer bisher für jeden relevanten Betriebszustand und für jede Verwendungsart je eine Kompensation durchführen, und die Parameter zur späteren Verwendung abspeichern. Bei zwei Betriebszuständen und bei zwei Verwendungsarten also vier Kompensationen.

Das andere Gerät kann insbesondere auch eine Schusswaffe sein. In diesem Fall kann es beispielsweise durch Laden oder Entladen oder auch durch wiederholtes Abfeuern der Waffe (Temperaturänderung, Schock) zu magnetischen Veränderungen kommen. Die Kompensation müsste also dementsprechend oft wiederholt werden.

Es ist daher eine Aufgabe der Erfindung, ein verbessertes optoelektronisches Messgerät mit einem Magnetkompass bereitzustellen, sowie ein verbessertes Verfahren zum Kompensieren eines Magnetkompasses.

Eine weitere Aufgabe der Erfindung ist es, ein solches Messgerät und Verfahren mit einer verbesserten Handhabbarkeit für einen Benutzer bereitzustellen, insbesondere wobei eine Initialkompensierung des Magnetkompasses schneller und mit weniger Aufwand durchführbar ist.

Eine weitere Aufgabe der Erfindung ist es, ein solches Messgerät und Verfahren mit einer geringeren Fehleranfälligkeit bereitzustellen.

Eine weitere Aufgabe ist es, ein solches Messgerät bereitzustellen, dass leichter und kleiner ausgestaltet sein kann, insbesondere hinsichtlich einer Abschirmung des Magnetkompasses gegenüber anderen Komponenten des Messgerätes oder gegenüber externen Geräte, mit denen das Messgerät verbunden wird.

Insbesondere ist es eine Aufgabe, ein solches Messgerät und Verfahren bereitzustellen, bei dem nach einer Initialkompensation keine weitere Kompensation durchgeführt werden muss, wenn eine bekannte externe magnetische Störung auftritt.

Mindestens eine dieser Aufgaben wird erfindungsgemäss durch ein optoelektronisches Messgerät mit den Merkmalen des Patentanspruchs 1, bzw. das Verfahren mit den Merkmalen des Anspruchs 11 gelöst. Weitere alternative oder vorteilhafte Aus- bzw. Weiterbildungen der Erfindung sind in den abhängigen Patentansprüchen beschrieben.

Ein erster Aspekt der vorliegenden Erfindung betrifft ein optoelektronisches Messgerät mit einem elektronischen Magnetkompass zum Bestimmen einer azimutalen Ausrichtung des Messgeräts und einer dem Magnetkompass zugeordneten Kompensationseinrichtung zum Kompensieren gerätefester Störfelder. Dabei ist das Messgerät dazu ausgestaltet, mindestens zwei definierte, wiederholbare Betriebszustände einzunehmen, und weist in jedem der Betriebszustände ein unterschiedliches gerätefestes Störfeld auf. Die Kompensationseinrichtung weist eine Recheneinheit und einen Datenspeicher auf sowie eine Kompensationsfunktionalität zum Durchführen einer Initialkompensation des elektronischen Magnetkompasses in einem ersten und einem zweiten Betriebszustand des Messgerätes. Das Messgerät ist ausserdem dazu ausgestaltet, mindestens zwei definierte, wiederholbare Anwendungszustände einzunehmen, wobei der Magnetkompass in jedem der Anwendungszustände einem unterschiedlichen externen magnetischen Störfeld ausgesetzt ist, und die Kompensationseinrichtung ist zusätzlich zum Kompensieren der externen Störfelder ausgestaltet. Erfindungsgemäss ist die Kompensationseinrichtung dabei dazu ausgestaltet, im Rahmen der Kompensationsfunktionalität zum Durchführen der Initialkompensation

- mittels des Magnetkompasses

  - einen ersten Magnetfeldsatz in einem ersten Gesamtzustand des Messgerätes zu messen, in dem das Messgerät den ersten Betriebszustand und einen ersten Anwendungszustand einnimmt,
  - einen zweiten Magnetfeldsatz in einem zweiten Gesamtzustand des Messgerätes zu messen, in dem das Messgerät den zweiten Betriebszustand und den ersten Anwendungszustand einnimmt, und
  - einen dritten Magnetfeldsatz in einem dritten Gesamtzustand des Messgerätes zu messen, in dem das Messgerät den ersten Betriebszustand und einen zweiten Anwendungszustand einnimmt, und

- durch die Recheneinheit jeweils basierend auf dem ersten, zweiten und dritten Magnetfeldsatz einen ersten, zweiten und dritten Parametersatz zu bestimmen, und basierend auf dem ersten, zweiten und dritten Parametersatz einen vierten Parametersatz abzuleiten, und

- den ersten, zweiten, dritten und vierten Parametersatz in dem Datenspeicher der Kompensationseinrichtung abzuspeichern.

Der abgeleitete vierte Parametersatz entspricht einem Parametersatz, der basierend auf einem vierten Magnetfeldsatz bestimmbar ist, das in einem vierten Gesamtzustand des Messgerätes, in dem das Messgerät den zweiten Betriebszustand und den zweiten Anwendungszustand einnimmt, messbar ist.

Gemäss einer Ausführungsform des Messgerätes ist dieses ein handhaltbares optoelektronisches Beobachtungsgerät. Insbesondere kann dieses eine Anzeigeeinheit zum Anzeigen von Messdaten, beispielsweise die azimutale Ausrichtung, aufweisen sowie eine Schnittstelle zum Bereitstellen eines Signals, das Information über die azimutale Ausrichtung umfasst, für einen externen Empfänger, z. B. ein Geographisches Informationssystem (GIS), eine militärische Feuerleiteinrichtung oder ein handhaltbares Datenverarbeitungsgerät.

Gemäss einer weiteren Ausführungsform weist der Magnetkompass des Messgerätes mindestens drei gerätefest angeordnete Magnetfeldsensoren zum dreidimensionalen Messen eines Magnetfelds und zwei Neigungssensoren zum Messen der Richtung des Gravitationsfelds auf.

Erfindungsgemäss, weist die Kompensationseinrichtung eine Speichereinheit auf zum Speichern mindestens eines aus den unterschiedlichen Störfeldern resultierenden magnetischen Versatzes, bzw. eines Versatzes der Parametersätze, insbesondere eines Versatzes zwischen dem ersten und einem weiteren Gesamtzustand des Messgerätes, wobei die Recheneinheit zum Berechnen der azimutalen Ausrichtung des Messgeräts in Abhängigkeit von einem aktuellen Zustand und basierend auf dem magnetischen Versatz ausgestaltet ist.

In einer Ausführungsform ist das Messgerät dazu ausgestaltet, an einem externen Gerät angebracht zu werden, das ein externes Störfeld erzeugt, beispielsweise an einem Stativ oder einer Waffe. In mindestens einem der mindestens zwei Anwendungszustände ist es an dem externen Gerät angebracht, wobei der erste und der zweite Anwendungszustand des Messgerätes sich hinsichtlich des externen Störfeldes des externen Gerätes voneinander unterscheiden.

Insbesondere kann das Messgerät dazu ausgestaltet sein, an verschiedenen externen Geräten angebracht zu werden, die unterschiedliche externe Störfelder erzeugen, oder an einem externen Gerät angebracht zu werden, das dazu ausgestaltet ist, mindestens zwei definierte, wiederholbare Zustände einzunehmen, wobei das externe Gerät in jedem der Zustände ein unterschiedliches externes Störfeld erzeugt.

In einer anderen Ausführungsform des Messgerätes weist die Kompensationseinrichtung eine Erfassungseinheit zum Erfassen eines aktuellen Betriebs- und/oder Anwendungszustandes des Messgerätes auf. Insbesondere kann die Erfassungseinheit dabei dazu ausgestaltet sein, den aktuellen Betriebs- bzw. Anwendungszustand automatisch zu erfassen.

Zum Erfassen des Betriebszustands kann beispielsweise das Ein- bzw. Ausschalten eines elektrischen Systems des Messgerätes, oder eine Positionsveränderung eines hart- oder weichmagnetischen Bauteiles des Messgerätes erfasst werden.

In einer Ausführungsform ist die Erfassungseinheit dazu ausgestaltet, eine Datenverbindung mit dem externen Gerät herzustellen, Daten über einen aktuellen Zustand des externen Gerätes mittels der Datenverbindung zu empfangen, und den aktuellen Anwendungszustand des Messgerätes basierend auf den Daten über den aktuellen Zustand des externen Gerätes zu ermitteln.

In einer anderen Ausführungsform unterscheiden der erste und der zweite Betriebszustand des Messgerätes sich zumindest hinsichtlich eines aktuellen Zustandes eines zuschaltbaren elektrischen Systems des Messgerätes voneinander, insbesondere darin, dass das elektrische System des Messgerätes ein- bzw. ausgeschaltet ist, und die Erfassungseinheit ist zum Erkennen eines aktuellen Zustandes des elektrischen Systems ausgestaltet.

Insbesondere können der erste und der zweite Betriebszustand sich in einer aktuellen Stromstärke und/oder Spannung in dem elektrischen System voneinander unterscheiden, und die Erfassungseinheit zum Ermitteln einer aktuellen Stromstärke und/oder Spannung in dem elektrischen System ausgestaltet sein.

Das zuschaltbare elektrische System kann beispielsweise ein Nachtsichtsystem oder eine Anzeigeeinrichtung sein, insbesondere aufweisend ein LCD-Display, eine Helligkeitsregelung aufweisen, oder auch ein GPS- oder ein Bluetooth-Modul sein. Gemäss einer weiteren Ausführungsform weist das Messgerät mindestens ein hart- oder weichmagnetisches Bauteil auf, das dazu ausgestaltet ist, mindestens zwei unterschiedliche Positionen im oder am Messgerät einzunehmen, wobei der erste und der zweite Betriebszustand sich darin voneinander unterscheiden, dass das hart- oder weichmagnetische Bauteil jeweils eine andere Position aufweist.

Das hart- oder weichmagnetische Bauteil kann insbesondere ein mechanischer Schalter, z. B. ein von einem Benutzer zu betätigender Kipp-, Dreh- oder Schiebeschalter, oder ein motorisiert verfahrbares Element sein, z. B. ein im Rahmen eines Zoom-Vorgangs verfahrbares optisches Element.

Die Kompensationseinrichtung kann dazu ausgestaltet sein, im Rahmen der Kompensationsfunktionalität einen Benutzer des Messgerätes zum Ausführen der Initialkompensation anzuleiten, insbesondere mittels einer Ausgabe von Handlungsanweisungen auf einer Anzeigeeinheit des Messgerätes. Die Handlungsanweisungen können insbesondere Anweisungen zum Verändern des Betriebs- oder Anwendungszustandes beinhalten, also beispielsweise Instruktionen zum Ein- oder Ausschalten eines elektrischen Systems, Bewegen eines hart- oder weichmagnetischen Bauteils in eine andere Position oder Montieren des Messgeräts auf einem externen Gerät.

Ein zweiter Aspekt der vorliegenden Erfindung betrifft ein Verfahren zur Kompensation eines Magnetkompasses, wobei der Magnetkompass Teil eines optoelektonischen Messgerätes ist - insbesondere gemäss dem ersten Aspekt -, wobei das Messgerät dazu ausgestaltet ist, mindestens zwei definierte, wiederholbare Betriebszustände und mindestens zwei definierte, wiederholbare Anwendungszustände einzunehmen, wobei das Messgerät in jedem der Betriebszustände ein unterschiedliches gerätefestes magnetisches Störfeld aufweist, und der Magnetkompass in jedem der Anwendungszustände einem unterschiedlichen externen magnetischen Störfeld ausgesetzt ist.

Das Verfahren umfasst

-   ein Messen eines ersten Magnetfeldsatzes mittels des Magnetkompasses in einem ersten Gesamtzustand des Messgerätes, in dem das Messgerät einen ersten Betriebszustand und einen ersten Anwendungszustand einnimmt,
-   ein Bestimmen eines ersten Parametersatzes basierend auf dem ersten Magnetfeldsatz,
-   ein Messen eines zweiten Magnetfeldsatzes mittels des Magnetkompasses in einem zweiten Gesamtzustand des Messgerätes, in dem das Messgerät einen zweiten Betriebszustand und den ersten Anwendungszustand einnimmt,
-   ein Bestimmen eines zweiten Parametersatzes basierend auf dem zweiten Magnetfeldsatz,
-   ein Messen eines dritten Magnetfeldsatzes mittels des Magnetkompasses in einem dritten Gesamtzustand des Messgerätes, in dem das Messgerät den ersten Betriebszustand und einen zweiten Anwendungszustand einnimmt,
-   ein Bestimmen eines dritten Parametersatzes basierend auf dem dritten Magnetfeldsatz,
-   ein Ableiten eines vierten Parametersatzes basierend auf dem ersten, zweiten und dritten Parametersatz, und
-   ein Speichern des ersten, zweiten, dritten und vierten Parametersatzes in einem Datenspeicher.

Der abgeleitete vierte Parametersatz entspricht dabei einem Parametersatz, der in einem vierten Gesamtzustand des Messgerätes, in dem das Messgerät den zweiten Betriebszustand und den zweiten Anwendungszustand einnimmt, messbar ist.

Gemäss einer Ausführungsform des Verfahrens wird das externe magnetische Störfeld durch ein Anbringen des Gerätes an einem externen Gerät, oder durch eine Zustandsänderung an einem externen Gerät an dem das Gerät angebracht ist, bewirkt, insbesondere wobei das externe Gerät das externe magnetische Störfeld erzeugt. Dabei sind das Gerät und das externe Gerät starr zueinander aneinander angebracht, insbesondere fixiert.

Gemäss einer weiteren Ausführungsform des Verfahrens umfasst dieses ein automatisches Erkennen des ersten und zweiten Betriebszustandes des Gerätes, insbesondere aufweisend ein Erkennen eines aktuellen Zustandes eines elektrischen Systems des Gerätes, und/oder einer aktuellen Position eines hart- oder weichmagnetischen Bauteiles des Gerätes.

Ein weiterer Aspekt der vorliegenden Erfindung betrifft ein Computerprogrammprodukt mit Programmcode, der auf einem maschinenlesbaren Träger gespeichert ist, zur Ausführung des Verfahrens gemäss dem zweiten Aspekt, wenn das Programm auf einer als Kompensationseinrichtung des Messgerätes gemäss dem ersten Aspekt ausgebildeten elektronischen Datenverarbeitungseinheit ausgeführt wird.

Die Erfindung betrifft ausserdem ein Computerprogrammprodukt mit Programmcode, der auf einem maschinenlesbaren Träger gespeichert ist, zur Ausführung des erfindungsgemässen Verfahrens, insbesondere wenn das Programm auf einer als Kompensationseinrichtung des erfindungsgemässen Messgerätes ausgebildeten elektronischen Datenverarbeitungseinheit ausgeführt wird.

Nachstehend wird die Erfindung anhand von Figuren näher erläutert. Es zeigen in schematischer Darstellung:

Fig. 1        eine beispielhafte Ausführungsform eines erfindungsgemässen Messgeräts mit Magnetkompass;

Fig. 2a-b    das Messgerät aus Fig. 1, montierbar auf verschiedene externe Geräte, hier ein Stativ und eine Waffe;

Fig. 3        eine beispielhafte Messanordnung zum Bestimmen von Zielkoordinaten eines entfernten Objekts mit einem Messgerät mit Magnetkompass auf einem Stativ;

Fig. 4a-b    zwei beispielhafte Betriebszustände eines erfindungsgemässen Messgeräts mit jeweils unterschiedlichem gerätefesten Störfeld;

Fig. 5      eine beispielhafte Anordnung von das gerätefeste Störfeld beeinträchtigenden elektrischen Systemen eines erfindungsgemässen Messgeräts;

Fig. 6a-b      zwei beispielhafte Betriebszustände eines erfindungsgemässen Messgeräts mit jeweils unterschiedlichem externen Störfeld;

Fig. 7a-b      zwei weitere beispielhafte Betriebszustände eines erfindungsgemässen Messgeräts mit jeweils unterschiedlichem externen Störfeld;

Fig. 8      ein Flussdiagramm zur Illustration eines beispielhaften Verfahrens zum Bestimmen einer azimutalen Ausrichtung; und

Fig. 9a-b      Flussdiagramme und zur Illustration eines beispielhaften Verfahrens zur Initialkompensation.

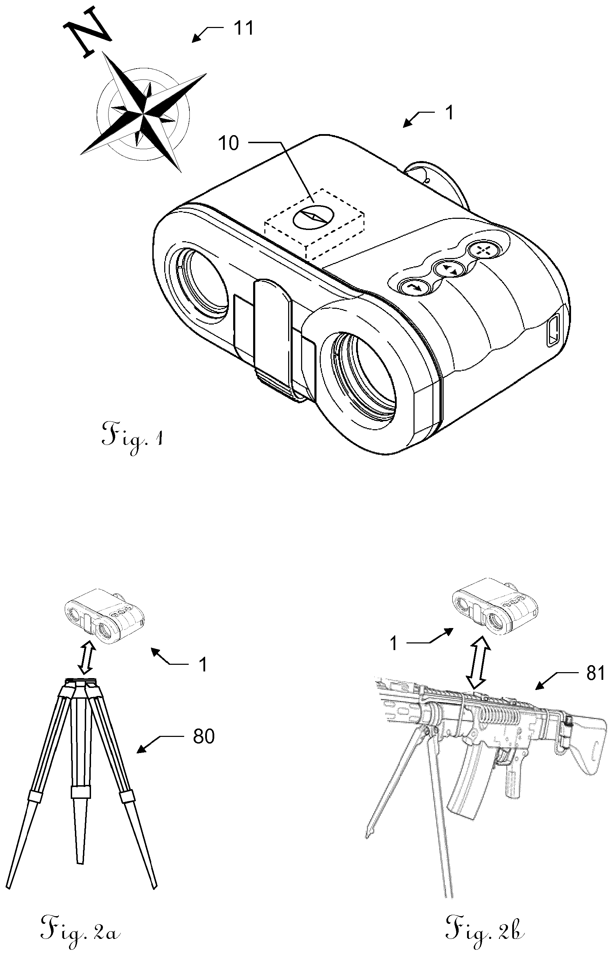

Figur 1 zeigt ein beispielhaftes erfindungsgemässes optoelektronisches Messgerät 1. Das hier rein beispielhaft dargestellte Messgerät 1 ist als ein handhaltbares Beobachtungsgerät zur Beobachtung eines Zielobjekts und zur Erfassung von Koordinaten des Zielobjekts ausgestaltet. Zu diesem Zweck weist es unter anderem einen Magnetkompass 10 zur Bestimmung einer azimutalen Ausrichtung des Messgerätes 1 relativ zum Erdmagnetfeld 11 auf. Als Magnetkompass 10 für ein solches erfindungsgemässes Gerät ist beispielsweise die DMC-Serie von Vectronix verwendbar. Das Messgerät 1 weist ausserdem eine Kompensationsfunktionalität auf zum Durchführen einer Kompensation des Magnetkompasses 10 vor einem Erfassen von Koordinaten.

Wie in den Figuren 2a und 2b illustriert, kann das Messgerät 1 neben der handgehaltenen Anwendung auch auf verschiedene externe Geräte montierbar ausgestaltet sein. Rein beispielhaft sind hier ein Stativ 80 und eine Waffe 81 dargestellt. Die externen Geräte, insbesondere wenn sie elektrische Komponenten oder Bauteile aus hart- und/oder weichmagnetischen Materialien aufweisen, erzeugen ein externes magnetisches Störfeld, das den Magnetkompass des Messgerätes 1 beeinflussen kann.

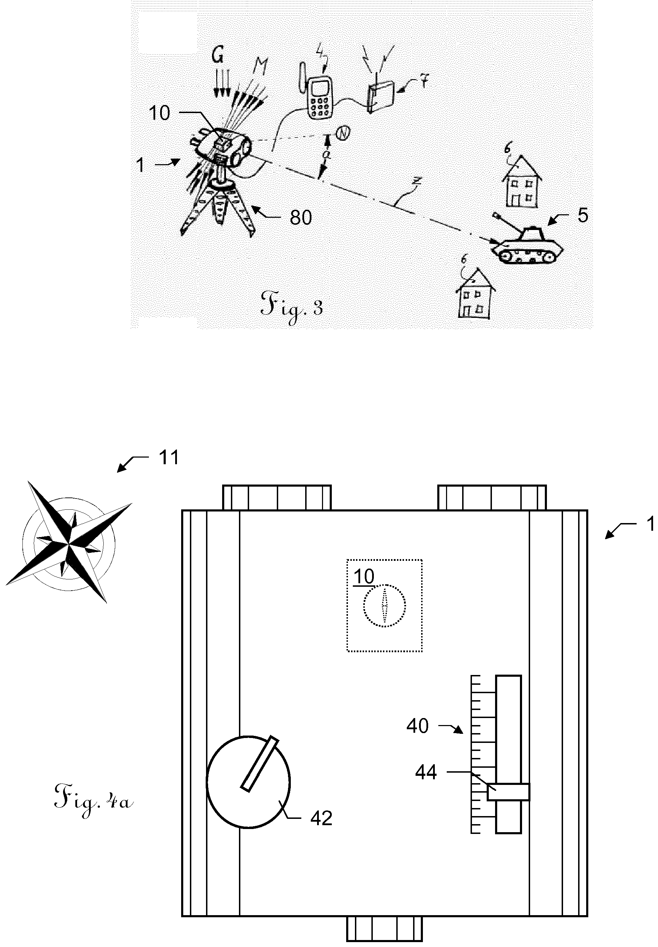

Figur 3 zeigt eine beispielhafte Messanordnung zum Bestimmen von Zielkoordinaten eines entfernten Zielobjekts 5. Die Messanordnung weist ein Messgerät 1, das auf einem Stativ 80 befestigt ist, einen GPS-Empfänger 4 und eine Übertragungseinrichtung 7 auf. Das Zielobjekt 5 wird hier von einem Kettenfahrzeug gebildet, das neben einem Haus 6 in Stellung gegangen ist. Die hier als externe Geräte dargestellten Komponenten GPS-Empfänger 4 und Übertragungseinrichtung 7 können alternativ auch in das Messgerät 1 integriert sein.

Im Messgerät 1, das hier als Beobachtungsgerät ausgebildet ist und ein Zielfernglas mit einer Zielachse Z aufweist, sind ein Laserentfernungsmesser und ein digitaler Magnetkompass 10 integriert. Im Gegensatz zum Laserentfernungsmesser ist der digitale Magnetkompass 10 als kleiner Quader innerhalb des Fernglases zeichnerisch angedeutet. Über den digitalen Magnetkompass 10, der hier drei gerätefest angeordnete Magnetfeldsensoren zum dreidimensionalen Messen eines Magnetfelds M und zwei Neigungssensoren zum Messen der Richtung des Gravitationsfelds G der Erde aufweist, wird die azimutale Ausrichtung a des Messgeräts 1 relativ zu einer kalkulatorischen Nordrichtung N und dessen zenitale Ausrichtung relativ zur einer Lotrechten bestimmt.

Bei der kalkulatorischen Nordrichtung N ist die - in regionalem Massstab ortsabhängige - Missweisung des Erdmagnetfelds gegenüber der geographischen Nordrichtung berücksichtigt. In an sich bekannter Weise kann dies durch Übermitteln eines für die jeweilige Region spezifischen Deklinationswerts vom GPS-Empfänger 4 zum Messgerät 1 praktisch automatisch erfolgen.

Ebenso wie die Berücksichtigung des korrekten Deklinationswerts ist eine korrekte Kompensation gerätefester Störfelder eine Grundvoraussetzung für ein korrektes Bestimmen der azimutalen Ausrichtung, da sich gerätefeste Störfelder in unmittelbarer Nachbarschaft zum Magnetkompass 10 befinden und daher nicht berücksichtigte Änderungen gerätefester Störfelder beachtliche Azimutfehler verursachen können. Auch gerätefeste Störfelder sind hier bei der kalkulatorischen Nordrichtung N berücksichtigt.

Da bei dieser Messanordnung die gerätefesten Störfelder korrekt kompensiert werden und sich keine ortsfesten Störfelder von lokalem Massstab in der Nähe des Messgeräts 1 befinden, liegt ein im Wesentliches homogenes Magnetfeld M, in dem azimutale Ausrichtungen a relativ zueinander korrekt ohne Kreisfehler bestimmt werden können. Diese Homogenität wird zusätzlich durch die Befestigung des Messgeräts 1 auf dem Stativ erhöht, da der Magnetkompass 10 nur innerhalb eines sehr kleinen Messraums von einigen wenigen Zentimetern bewegt werden kann.

Ortsfeste magnetische Störfelder von regionalem Massstab, welche einen konstanten Azimutfehler verursachen, können zum Schätzen der Genauigkeit azimutaler Ausrichtungen a detektiert und grob abgeschätzt werden. Bei diesem Verfahren wird mit dem digitalen Magnetkompass 10 bei einem Bestimmen einer azimutalen Ausrichtung a gleichzeitig wenigstens eine Feldgrösse des Magnet- und Gravitationsfelds G und M, hier die magnetische Inklination, bereitgestellt. Da hier der Messort, beispielsweise über den GPS-Empfänger 4, dem Messgerät 1 bekannt ist, kann die gemessene magnetische Inklination selbsttätig mit der regional ortsabhängigen magnetischen Inklination eines Modells des Erdmagnetfelds - hier des IGRF-Modells - im Lichte eines vorgegebenen Schwellwerts beurteilt und eine Genauigkeit der azimutalen Ausrichtung a festgesetzt werden.

Ist die Differenz zwischen der beim Bestimmen der azimutalen Ausrichtung a gemessenen magnetischen Inklination und der magnetischen Inklination des IGRF-Modells im Vergleich zum Schwellwert bedeutend, so ist ein ortsfestes magnetisches Störfeld von regionalem Ausmass vorhanden. In diesem Fall ist die Schätzung der Genauigkeit der azimutalen Ausrichtung a durch das Messgerät 1 entsprechend anzupassen.

Ist hingegen die Differenz im Vergleich zum Schwellwert unbedeutend, so dürfte kein bedeutendes, ortsfestes magnetisches Störfeld von regionalem Ausmass vorhanden sein. Da hier zudem kein ortsfestes Störfeld von lokalem Massstab in der Nähe des Messgeräts 1 vorhanden ist und die Missweisung sowie die gerätefesten Störfelder korrekt berücksichtigt sind, kann gemäss einem weiteren Verfahren die Genauigkeit azimutaler Ausrichtungen a entsprechend einer Kompensationsgenauigkeit festgesetzt werden. Diese resultiert aus der arithmetischen Kompensation gerätefester Störfelder und stellt eine Höchstgrenze für die erreichbare Genauigkeit azimutaler Ausrichtungen a dar, wenn gerätefeste Störfelder vorhanden sind und diese beim Bestimmen azimutaler Ausrichtungen a kompensiert werden. Bei der vorliegenden Messanordnung ohne ortsfeste Störfelder wird die Genauigkeit azimutaler Ausrichtungen a in guter Näherung durch die Kompensationsgenauigkeit bestimmt.

Die arithmetische Kompensation gerätefester Störfelder erfolgt gemäss der Offenbarung der DE 196 09 762 C1 über eine Vektorgleichung, deren Parameter mittels eines Optimierungsverfahrens bestimmt wurden. Das Optimierungsverfahren basiert auf Werten einer vorgegebenen Abfolge von Messungen des Magnet- und Gravitationsfelds M und G, bei welcher Abfolge das Messgerät 1 an einem Messort jeweils unterschiedlich im Raum ausgerichtet ist. Die Kompensationsgenauigkeit wird mit Hilfe eines Verfahrens der statistischen Ausgleichsrechnung geschätzt, welches unter Berücksichtigung der festgelegten Parameter der Vektorgleichung auf den Werten der Abfolge von Messungen basiert.

Nachdem die azimutale Ausrichtung a des auf das Zielobjekt 5 ausgerichteten Messgeräts 1 bestimmt ist, wird an einer Schnittstelle des Messgeräts 1 ein Signal bereitgestellt, das unter anderem die bestimmte azimutale Ausrichtung a und deren geschätzte Genauigkeit umfasst. Das bereitgestellte Signal wird zum GPS-Empfänger 4 übermittelt, dort bei der Berechnung der Zielkoordinaten und deren geschätzter Genauigkeit berücksichtigt und über die Übertragungseinrichtung 7 zu einer (hier nicht dargestellten) Feuerleiteinrichtung übertragen. Anstelle einer militärischen Feuerleiteinrichtung, insbesondere bei zivilen Anwendungen, kann der Empfänger auch ein Geographisches Informationssystem (GIS) oder ein sonstiges Datenverarbeitungssystem bzw. -gerät sein, insbesondere ein handhaltbares Smartphone oder ein Tablet-Computer.

Aufgrund im Messgerät 1 implementierter Verfahren zum Schätzen der Genauigkeit der azimutalen Ausrichtung a, kann die Genauigkeit relativ zuverlässig abgeschätzt werden. Dadurch kann bei einer gegen die Zielkoordinaten geplanten Feuerwirkung ein möglicher Kollateralschaden am Haus 6 rechtzeitig erkannt werden.

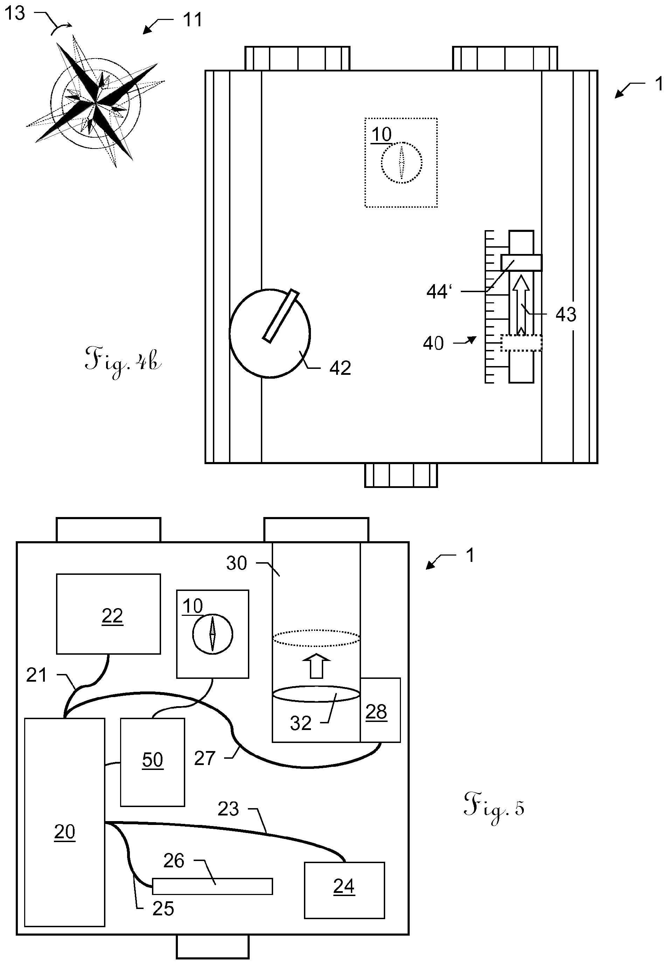

Elektronische Messgeräte 1 wie das in Figur 1 dargestellte Beobachtungsgerät weisen in der Regel eine Vielzahl an möglichen Betriebszuständen auf. Diese Betriebszustände können zu einer unterschiedlich ausgeprägten Störung des Magnetfeldes führen, was zu einer unterschiedlichen Angabe der azimutalen Ausrichtung durch den Magnetkompass führt. Mögliche Ursachen für solche magnetisch veränderliche Zustände eines Messgerätes werden in den Figuren 4a,b und 5 illustriert.

Dabei zeigen die Figuren 4a und 4b ein Beobachtungsgerät 1 in der Aufsicht. Der im Inneren des Gerätes integrierte Magnetkompass 10 ist mit gepunkteten Linien dargestellt. Auf dem Beobachtungsgerät 1 sind hier beispielhaft zwei durch einen Benutzer des Gerätes von Hand verstellbare Schalter 40, 42 dargestellt, die ganz oder teilweise aus hart- oder weichmagnetischen Materialien bestehen: ein Schiebeschalter 40, beispielsweise zum stufenlosen Einstellen eines Zoomfaktors, und ein Drehschalter 42, beispielsweise zum Ein- und Ausschalten eines Nachtsichtbetriebs. Die beiden Schalter 40, 42 nehmen dabei in Figur 3a jeweils eine erste Position ein.

Wird eine Kompensation des Magnetkompasses 10 in diesem Betriebszustand des Gerätes 1 durchgeführt, d. h. mit diesen Positionen der beiden Schalter 40, 42, so ist eine hochgenaue Bestimmung der azimutalen Ausrichtung anhand des Magnetfeldes 11 auch nur in diesem Betriebszustand möglich.

In Figur 3b ist eine Situation dargestellt, in welcher der Schiebeschalter 40 von der ersten Position 44 (siehe Figur 4a) durch eine Schiebebewegung 43 (insbesondere manuell ausgeführt durch einen Benutzer) in eine zweite Position 44' bewegt wurde. Aufgrund der hart- und/oder weichmagnetischen Eigenschaften des Schalters 40, ändert sich dadurch das gerätefeste Störfeld. Das Magnetfeld 11 wird folglich durch den Magnetkompass 10 mit einer gewissen Abweichung, dem Versatz oder Offset, und einem weichmagnetischen Einfluss abhängig von der Richtung und Stärke des Erdmagnetfeldes ermittelt. Dieser Versatz 13 beschreibt dabei den Unterschied des ermittelten Magnetfelds zwischen dem Gerätezustand während der Initialkompensation und dem Gerätezustand während der Koordinatenmessung.

Aufgrund des entstehenden Versatzes 13 müsste bei Geräten und Verfahren des Standes der Technik nun eigentlich eine neue Kompensation erfolgen, was für den Benutzer aber zeitaufwendig wäre und daher oft lästig. Oft führen das Unwissen über die Notwendigkeit einer erneuten Kompensation oder die Mühseligkeit des Verfahrens dazu, dass der Anwender keine erneute Kompensation durchführt, was die Genauigkeit des Kompasses 10 reduziert.

Das Gerät weist daher vorzugsweise eine Kompensationseinrichtung auf, die dazu ausgestaltet ist, den Betriebszustand des Gerätes zu erfassen und - abhängig von einem ersten Betriebszustand während der Kompensation und einem aktuellen Betriebszustand - einen Parameterversatzwert zu berechnen bzw. aus einem Datenspeicher der Kompensationseinrichtung abzurufen. Dieser Versatzwert wird dann bei der Ermittlung der tatsächlichen azimutalen Ausrichtung des Geräts 1 berücksichtigt.

Mit Bezug zu den Figuren 4a und 4b bedeutet dies, dass zunächst die Positionen der beiden Schalter 40, 42 während der Kompensation automatisch erfasst wird. Anschliessend werden die Positionen weiter erfasst, sodass der Positionswechsel 43 und/oder die neue Position 44' des Schiebeschalters 40 erkannt wird. Der daraus resultierende Versatz 13 ist in einem Speicher der Kompensationseinheit hinterlegt und kann aus diesem bei Bedarf abgerufen und zur Bestimmung der Ausrichtung herangezogen werden. Das Erfassen der Positionen kann sowohl kontinuierlich fortlaufend als auch anlassbezogen erfolgen. Anlassbezogen bedeutet dabei insbesondere, dass die Positionen zumindest immer dann erfasst werden, wenn eine Kompensation oder eine Messung durchgeführt wird. Alternativ kann auch eine Positionsänderung überwacht werden, wobei der Gerätezustand beispielsweise auch nur bei einer erkannten Änderung aktualisiert wird.

Figur 5 zeigt das Messgerät 1 in einem schematischen Querschnitt mit beispielhaften internen Komponenten. Die dargestellten internen Komponenten umfassen zum einen den Magnetkompass 10 mit einer diesem zugeordneten Kompensationseinrichtung 50 und zum anderen mögliche hart- oder weichmagnetische Störquellen, die die Bestimmung einer azimutalen Ausrichtung durch den Magnetkompass 1 negativ beeinflussen können. Dargestellt sind eine Energiequelle in Form eines Akkus 20 und als Verbraucher rein beispielhaft eine Nachtsichtvorrichtung 22, ein GPS-Modul 24, ein LCD-Display 26, sowie ein Motor 28 zum Betätigen einer Zoomvorrichtung 30. Zwischen dem Akku 25 und jedem der Verbraucher 22, 24, 26, 28 verläuft eine elektrische Leitung 21, 23, 25, 27.

Sowohl die Leitungen als auch die Verbraucher stellen als zuschaltbare elektrische Systeme mögliche elektrische Störquellen 21-28 für den Magnetkompass 10 dar. Wird eine Kompensation des Gerätes 1 in einem Zustand durchgeführt, in dem das GPS-Modul 24 und das LCD-Display 26 eingeschaltet sind, d. h. entsprechende Ströme durch die elektrischen Leitungen 23, 25 zu den beiden Verbrauchern fliessen, werden diese hartmagnetischen Störquellen kompensiert, sodass der Magnetkompass 10 in diesem Zustand des Gerätes 1 zuverlässig funktioniert.

Wird danach jedoch die Nachtsichtvorrichtung 22 in Betrieb genommen, fliessen zusätzliche Ströme durch die Leitung 21. Diese zusätzliche, nicht kompensierte Störquelle verursacht eine fehlerhafte Messung des Magnetkompasses 10.

Darüber hinaus kann die Nachtsichtfunktion einen erhöhten Stromverbrauch des LCD-Displays 26 verursachen, wodurch die Störquelle des Stromflusses zu diesem elektrischen System grösser wird.

Auch in dieser Ausführungsform weist das Gerät eine Kompensationseinrichtung 50 auf, die dazu ausgestaltet ist, den Betriebszustand des Gerätes zu erfassen und abhängig von einem ersten Betriebszustand während der Kompensation und einem aktuellen Betriebszustand einen magnetischen Versatzwert zu berechnen bzw. aus einem Speicher abzurufen. In dieser Ausführungsform ist die Kompensationseinrichtung 50 dazu ausgestaltet, den Zustand der einzelnen elektrischen Systeme zu erfassen. Der Störeinfluss jedes dieser Systeme sowohl im ein- als auch ausgeschalteten Zustand auf den Magnetkompass 10 ist bekannt und vorzugsweise ab Werk in einem Speicher der Kompensationseinrichtung 50 hinterlegt.

Mit Bezug zu dem oben beschriebenen Beispiel heisst das, dass die Kompensationseinrichtung 50 erkennt, dass während der Kompensation das GPS-Modul 24 und das LCD-Display 26 eingeschaltet sind, und anschliessend mit der Nachtsichtvorrichtung 22 ein weiteres Gerät in Betrieb genommen wird, das den Magnetkompass 10 im eingeschalteten Zustand beeinträchtigt. Der Unterschied der Beeinträchtigungen, d. h. hier die zusätzliche Beeinträchtigung durch die eingeschaltete Nachtsichtvorrichtung 22, ist als Versatzwert in dem Speicher der Kompensationseinrichtung 50 hinterlegt und wird zur Ermittlung der aktuellen azimutalen Ausrichtung herangezogen.

Die Zoomvorrichtung 30 weist hier ein verstellbares optisches Element 32 auf. Auch dieses kann teilweise hart- oder weichmagnetisch sein. Vorzugsweise ist daher auch eine Position des optischen Elements 32 durch die Kompensationseinrichtung 50 erfassbar und entsprechende Versatzwerte sind im Speicher abrufbar bereitgestellt.

Von den "inneren" Betriebszuständen des Gerätes, in denen der Magnetkompass einem jeweils unterschiedlichem gerätefesten Magnetfeld ausgesetzt ist, werden in diesem Dokument die "äusseren" Anwendungszustände des Gerätes unterschieden, in denen der Magnetkompass einem jeweils unterschiedlichem externen Magnetfeld ausgesetzt wird, das insbesondere von einem externen Gerät erzeugt werden kann, in dessen Nähe der Kompass positioniert ist.

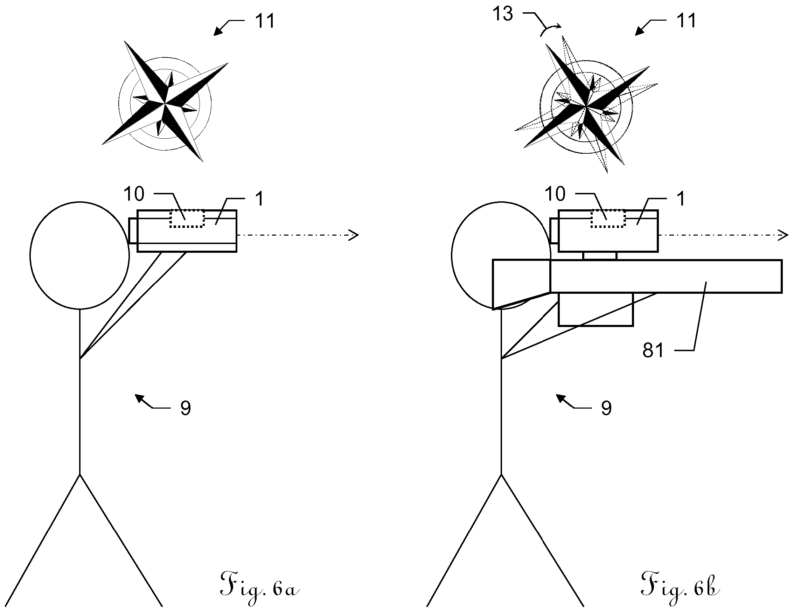

Die Figuren 6a und 6b illustrieren an einem ersten Beispiel zwei sich hinsichtlich eines externen hart- und weichmagnetischen Störfeldes unterscheidende Anwendungszustände eines optoelektronischen Messgerätes 1. Dabei wird in Figur 6a das Messgerät 1 von einem Benutzer 9 in der Hand gehalten, während es in Figur 6b auf einer Handfeuerwaffe 81 montiert ist, die der Benutzer 9 zusammen mit dem Messgerät 1 verwendet. Der Magnetkompass 10 des Gerätes erfasst in beiden Fällen das Magnetfeld 11, wobei im zweiten Fall der Figur 6b aufgrund eines durch die Waffe 81 verursachten magnetischen Störfeldes ein Versatz 13 gegenüber dem ersten Fall auftritt.

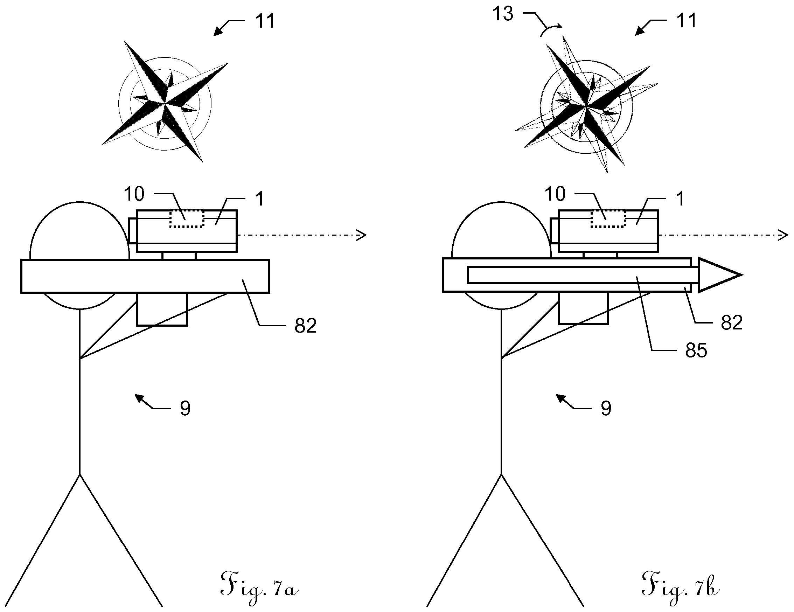

In den Figuren 7a und 7b wird dies mit einem zweiten Beispiel illustriert. Figur 7a zeigt einen ersten Anwendungszustand des Messgerätes 1, in welchem es auf einer Panzerabwehrwaffe 82 montiert ist, die hier von dem Benutzer 9 handgehalten verwendet wird. Die Panzerabwehrwaffe 82, die beispielsweise zum Verschiessen einer Lenkrakete oder einer Granate oder als Panzerbüchse ausgestaltet sein kann, verursacht in diesem Zustand ein erstes magnetisches Störfeld. Figur 7b zeigt einen zweiten Anwendungszustand des Messgerätes 1. Dabei ist es immer noch auf derselben Panzerabwehrwaffe 82 montiert, diese ist jetzt jedoch geladen. Die Rakete 85 und die Panzerabwehrwaffe 82 erzeugen zusammen ein anderes magnetisches Störfeld als die Panzerabwehrwaffe 82 in Figur 7a alleine. Das durch den Kompass 10 gemessene Magnetfeld weist dementsprechend einen Versatz 13 auf.

Andere, hier nicht gezeigte, Beispiele für eine Änderung eines externen hart- und weichmagnetischen Störfeldes umfassen unter anderem das Montieren auf einem Stativ oder der Einsatz einer neuen Batterie.

Da sich die geräteinternen magnetischen Eigenschaften nicht verändern, genügt es, im jeweils zweiten (oder weiteren) Anwendungszustand eine Kompensation nur in einem Betriebszustand des Gerätes manuell durchzuführen. Für einen zweiten Betriebszustand (oder beliebig viele weitere Betriebszustände) können die Werte aus den anderen Kompensationen ermittelt werden, wie nachfolgend beschrieben wird.

Beschrieben wird ein Verfahren zur Extrapolation eines Parametersatzes zur Kompensation magnetischer Störungen aus drei anderen bekannten Parametersätzen, wobei eine Sensoranordnung zur Magnetfeldmessung auf einen Träger montiert wird, der zum Beispiel ein Beobachtungsgerät sein kann, und der sowohl weich- als auch hartmagnetische Materialien enthält, die sich in verschiedenen Lagen und/oder verschiedenen Magnetisierungszuständen befinden können, je nach Betriebszustand der Verwendung des besagten Trägers. Dabei wird ein erster Parametersatz in einem ersten Zustand bestimmt, ein weiterer Parametersatz in einem zweiten Zustand. In einem dritten wird ein zusätzlicher magnetischer Störer an dem besagten Träger befestigt, und in einem der beiden vorherigen Zustände ein Parametersatz bestimmt. Aus den vorhandenen Parametersätzen wird dann ein geeigneter Parametersatz für den anderen Zustand mit dem zusätzlichen Störer hergeleitet.

Dieses Verfahren kann durchgeführt werden, sowohl bei bekannten Umgebungsfeldstärken, d. h. für ein physikalische korrekt kalibriertes Magnetometer auf dem Träger oder für eine unkalibrierte Magnetfeldsensoranordnung auf dem Träger, als auch bei unbekannten Umgebungsfeldstärken, d. h. bei demselben Umgebungsfeld für alle Messungen oder bei verschiedenem Umgebungsfeld für jede Messung.

Das Verfahren gilt für beliebig viele interne Zustände 1,2,...,N ("Betriebszustände"; vgl. Figuren 4a-b, 5) und externe Zustände a,b,c,... ("Anwendungszustände"; vgl. Figuren 6a-b, 7a-b) des Messgerätes. Im folgenden wird zur Vereinfachung immer jeweils eine "Vierergruppe" von Zuständen betrachtet werden, d. h. zwei Betriebszustände. Dabei nimmt die Verwendung ohne Zusatzstörer eine Sonderstellung ein, indem man annimmt, dass ihre Parameter über längere Zeit stabil bleiben.

Grundlegendes Physikalisches Modell

Das grundlegende mathematische Störungsmodell ist zum Beispiel in der EP 0 826 137 B1 beschrieben:

$$r = M \times b_E + o$$

mit:

r:     $3 \times 1$-Vektor der magnetischen Daten wie von den Sensoren gemessen
M:     $3 \times 3$-weichmagnetische Matrix (welche im Allgemeinen auch die Effekte der Sensor-Skalenfehler und Nichtorthogonalitäten enthält)
$b_E$:   $3 \times 1$-Vektor des Umgebungs-Magnetfeldes (Erdmagnetfeld oder zusätzliche erdfeste Störfelder)
o:     $3 \times 1$-Vektor der hartmagnetischen Störfelder (welche im Allgemeinen auch die Effekte der Sensor-Offset enthält)

Diese Gleichung kann invertiert und nach dem Erdmagnetfeld aufgelöst werden:

$$bE = m \times (r - o)$$

mit: $m = M^{-1}$

Eine hart-/weichmagnetische Kompensation, wie beispielsweise beim DMC-SX der Firma Vectronix realisiert, bestimmt M, respektive m, und o.

Erweiterte magnetische Störungsmodelle

Wir betrachten in genauerem Detail die Zusammensetzung der weichmagnetischen Matrix M des vorherigen Kapitels und betrachten den Effekt, welche magnetische Störungen auf die physikalischen Felder haben:

$$b = b_E + D_1 \times b_E + \ldots + D_N \times b_E + b_{d1} + \ldots b_{dM} = \left(I + D_d\right) \times b_E + b_d = M_d \times b_E + b_d$$

mit:

b: gesamtes physikalisches Feld in physikalischen Einheiten (z.B. T = Tesla, $\mu$T, nT, G = Gauss)
$b_E$: Erdmagnetfeld in denselben Einheiten
$D_k$: Streumatrix des weichmagnetischen Störers k

$$D_d \; = \; D_1 \; + \; \ldots \; + \; D_N$$

$b_{dj}$: hartmagnetischer Vektor des Störers j (vorteilhaft Numerierung j=k, M=N)

$$b_d \; = \; b_{d1} \; + \; \ldots \; + \; b_{dM}$$

Diese Information kann benutzt werden, um das eigentliche Erdfeld herauszufiltern:

$$b_E = M_d^{-1}\left(b - b_d\right)$$

In einem digitalen Magnetkompass, wie zum Beispiel dem DMC-SX der Firma Vectronix, wird die Messung der Magnetfelder durch magnetische Feldsensoren vorgenommen. Diese können durch ihre Messrichtungen, Skalenfaktoren und Offsetfehler beschrieben werden:

$$r_k = f_k \times e_k^T b + o_k = m_k^T b + o_k, \quad k = x, y, z$$

wobei:

$r_k$: Rohdatenwert
$f_k$: Skalenfaktor (inklusive Verstärkungsfaktoren usw.)
$e_k$: 3×1-Einheitsvektor in Richtung der Sensormessachse
$v^T$: transponierter (1×3) Vektor
$m_k$: 3×1-Vektor, kombinierter Effekt von Skalenfaktor und Richtung (=$f_k \times e_k$)
$o_k$: Sensoroffset (Nullpunktsfehler)
b: physikalisches Feld am Ort des Sensors

Dies kann mit einer Sensormatrix $M_s$, und Offsetvektor $o_s$ beschrieben werden, wobei dann insgesamt für die letztendlich gemessenen Sensorwerte r (Rohdaten), inklusive der physikalischen Effekte der Störer gilt:

$$r = M_s \times b + o_s = M_s \times \left(M_d \times b_E + b_d\right) + o_s$$

mit:

r: 3×1 Rohdatenvektor
$M_s$: 3×3 Matrix der Skalenfehler und Orhtogonalitätsabweichungen
$o_s$: 3×1 Vektor der Sensoroffsets

$$M_S = \begin{pmatrix} m_x^T \\ m_y^T \\ m_z^T \end{pmatrix} \qquad O_S = \begin{pmatrix} o_x \\ o_y \\ o_z \end{pmatrix}$$

Dies wird invertiert, um das Erdmagnetfeld in physikalischen Einheiten zu erhalten:

$$b_E = \left(M_s \times M_d\right)^{-1} \times \left(r - o_d - o_s\right) = M^{-1} \times \left(r - o\right),$$

wobei der physikalische hartmagnetische Vektor zur Vereinheitlichung dargestellt wurde als

$$b_d = M_d \times o_d \quad \Rightarrow \quad o_d = M_d^{-1} b_d \; .$$

Bei Feldkompensationen, die ohne weitere externe Hilfsmittel stattfinden, besteht keine Möglichkeit, das durch Inversion der physikalisch-technischen Gesamtgleichung bestimmbare Erdmagnetfeld in physikalischen Einheiten anzuzeigen, da die physikalische Feldstärke des Umgebungsfelds nicht bekannt ist, und ohne weitere Hilfsmittel (z. B. einem physikalisch kalibrierten Magnetfeldmessgerät) auch nicht bestimmt werden kann. Zwar könnte die Sensormatrix $M_s$ bei ausreichender Stabilität der Sensoren im Werk bestimmt werden, jedoch ergeben sich durch die geräteinternen weichmagnetischen Effekte objektive Feldvergrösserungen oder Feldverkleinerungen (Flusskonzentration, respektive Flussdispersion), die als unbekannt vorausgesetzt werden müssen.

In einer praktikablen Feldkompensation für einen magnetischen Kompass wie dem DMC-SX, der nur Richtungen und keine objektiven Feldstärken benötigt, wird deshalb eine einheitliche Skalierung des angezeigten Feldes auf einen festen Zahlenwert $f_D$ durchgeführt:

$$b_{DE} = \frac{f_D}{\left|b_{EC}\right|} \times b_E \; ,$$

so dass $|b_{DE}| = f_D$, z. B. 4096 am Ort der Kompensation mit Erdfeld (respektive Umgebungsfeld) $b_E = b_{EC}$ (in physikalischen Einheiten) angezeigt wird (beim DMC-SX wird die angezeigte Feldstärke auf 4096 Einheiten normiert).

Insgesamt:

$$b_{DE} = \frac{f_D}{\left|b_{EC}\right|} \times \left(M_s \times M_d\right)^{-1} \times \left(r - o_d - o_s\right) = M^{-1} \times \left(r - o\right) = m \times \left(r - o\right)$$

und invertiert:

$$r = \left(\frac{f_D}{\left|b_{EC}\right|}\right)^{-1} \times M_s \times M_d \times b_{DE} + o_s + o_d = M \times b_{DE} + o$$

mit:

$b_{DE}$:    $3 \times 1$-Vektor, Erdmagnetfeld wie angezeigt durch das Interface des DMC

$b_E$:    $3 \times 1$-Vektor, Erdmagnetfeld in physikalischen Einheiten (z. B. T = Tesla, $\mu$T, nT, G = Gauss)

$\dfrac{f_D}{\left|b_{EC}\right|}$ :    Faktor, damit der vom DMC angezeigte Feldvektor $f_D$ Einheiten aufweist (z. B. 4096)

$M_s$:    $3 \times 3$-Magnetfeldsensormatrix

$M_d$:    $3 \times 3$-Matrix der weichmagnetischen Effekte

$$M_d = I + D_1 + D_2 + \ldots D_N$$

I:        3×3-Identitätsmatrix

$D_k$:      3×3-Matrix, die die Streuung des Erdmagnetfelds am Weichmagneten K beschreibt (k = 1 ... N)

$o_s$       3×1-Vektor der Sensoroffsets

$o_d$       3×1-Vektor äquivalenter Sensoroffsets entsprechend der Summe der hartmagnetischen Störfelder

$$o_d = \left(\frac{f_D}{|b_{EC}|}\right)^{-1} \times M_s \times M_d \times b_d$$

Insgesamt ergeben sich die kombinierten Matrizen und Vektoren:

$$M = \left(\frac{f_D}{|b_{EC}|}\right)^{-1} \times M_s \times M_d$$

$$m = M^{-1} = \frac{f_D}{|b_{EC}|} \times \left(M_s \times M_d\right)^{-1}$$

$$o = o_s + o_d = o_s + M \times b_d$$

Magnetische Transformation

Wir nehmen an, dass wir ein Gerät mit eingebautem DMC in mehrere mögliche Zustände bringen können, welche sich im Allgemeinen sowohl hart- als auch weichmagnetisch unterscheiden.

$$Z = 1, 2, \ldots N_Z$$

In jedem der Zustände werden die oben beschriebenen kombinierten weichmagnetischen Matrizen und hartmagnetischen Offsets bestimmt.

An das Gerät wird dann ein weiterer hart- und weichmagnetischer Störer angebaut oder anderweitig in eine geometrisch feste Beziehung gebracht, wodurch ein kombinierter Zustand ZM entsteht:

$$ZM = 1M, 2M, \ldots N_Z M$$

Ziel: Das Gerät wird nur in einem der Zustände ZM weich- /hartmagnetisch kompensiert. Alle weiteren Z'M werden aus den Parametern der vorherigen Zustände Z, Z' und dem Zustand ZM extrapoliert.

Extrapolation der Physikalischen Störer

Die physikalischen Streumatrizen seien durch magnetische Kompensationsverfahren mittels physikalisch objektiver Messungen (z.B. eines kalibrierten Magnetometers im Gerät und am Ort der Kompensation zur Bestimmung der objektiven Erdfeldstärke) eruiert worden, in je einem Zustand Z und Z'. Dann gilt jeweils:

$$b_E = M_Z^{-1}\left(b - b_{dZ}\right) \qquad b_E = M_{Z'}^{-1}\left(b - b_{dZ'}\right)$$

mit:

$$M_Z = I + D_Z \qquad M_{Z'} = I + D_{Z'}$$

Wird ein weiterer Störer M zum Zustand Z des Gerätes hinzugefügt, und physikalische kompensiert, so gilt:

$$b_E = M_{ZM}^{-1}\left(b - b_{dZM}\right)$$

mit:

b: physikalisches Gesamtfeld (Erdfeld und Störer)
$b_E$: physikalisches Erdfeld

$$M_{ZM} = I + D_{ZM} = I + D_Z + D_M$$

gesamte weichmagnetische Matrix

$$b_{dZM} = b_{dZ} + b_{dM}$$

gesamter hartmagnetischer Vektor

Es wird nun gewünscht, ohne weitere vom Benutzer durchgeführte Kompensation den magnetischen Gesamtzustand eines weiteren Gerätezustandes Z' mit Störer M zu bestimmen. Dabei gilt:

$$b_E = M_{Z'M}^{-1}\left(b - b_{dZ'M}\right)$$

mit:

$$M_{Z'M} = I + D_{Z'M} = I + D_{Z'} + D_M$$

gesamte weichmagnetische Matrix

$$b_{dZ'M} = b_{dZ'} + b_{dM}$$

gesamter hartmagnetischer Vektor

Daraus folgt aber:

$$M_{Z'M} = I + D_{Z'} + D_M = I + D_Z + D_M + \left(D_{Z'} - D_Z\right) = M_{ZM} + \left(M_{Z'} - M_Z\right)$$

$$b_{dZ'M} = b_{dZ'} + b_{dM} = b_{dZ} + b_{dM} + \left(b_{dZ'} - b_{dZ}\right) = b_{dZM} + \left(b_{dZ'} - b_{dZ}\right)$$

Damit sind die gesuchten Grössen auf bereits bekannte zurückgeführt, wie gewünscht.

Extrapolation mit Geräterohdaten

Wie weiter oben beschrieben enthalten die im Gerät gemessenen Rohdaten r zusätzlich den Effekt der Magnetfeldsensorfehler, inklusive nachfolgender Verstärkung und Digitalisierung, beschrieben durch die Sensormatrix $M_s$ und Sensoroffsets $o_s$:

$$r = M_s \times b + o_s = M_s \times \left(M_d \times b_E + b_d\right) + o_s$$

Die Sensormatrix $M_s$ und Sensoroffsets $o_s$ seien bekannt, stabil und separat abgespeichert, zum Beispiel durch eine Werksmessung mit Abspeicherung im DMC selber. Damit wird de facto wieder ein kalibriertes Magnetfeldmessgerät erzeugt.

Zusätzlich sei wie im vorherigen Kapitel eine objektive physikalische Messung des Umgebungs-Magnetfelds am Ort der Kompensation vorhanden.

In einem ersten Schritt berechnen wir jeweils das objektive physikalische Feld im Gerät aus den Rohdaten:

$$b = M_s^{-1}\left(r - o_s\right)$$

Mit diesem Feld können wir wie oben beschrieben fortfahren. Der Gesamteffekt ist dann gegeben durch

$$b_E = M_{Z'M}^{-1}\left(b - b_{Z'M}\right) = M_{Z'M}^{-1}\left(M_s^{-1}\left(r - o_s\right) - b_{dZ'M}\right) = M^{-1}\left(r - o\right)$$

mit:

$$M = M_s \times M_{Z'M}$$

$$o = o_s + M_s \times b_{dZ'M}$$

und den Grössen $M_{Z'M}$ und $b_{Z'M}$ wie zuvor beschrieben.

$$M_{Z'M} = M_{ZM} + \left(M_{Z'} - M_Z\right)$$

$$b_{Z'M} = b_{ZM} + \left(b_{Z'} - b_Z\right)$$

Extrapolation mit ortsabhängiger Skalierung

Wie weiter oben beschrieben nehmen wir an, dass keine Messung der Magnetfelder des Kompensationsortes in absoluten physikalischen Einheiten möglich ist, wodurch eine willkürlich festgelegte Skalierung des angezeigten Erdmagnetfeldes vorgenommen werden muss, auf einen festgelegten Wert $f_D$, z. B. 4096.
In diesem Fall spielt es keine Rolle, ob die Sensormatrix $M_S$ und Sensoroffsets $o_S$ aus einer Werkskalibration bekannt sind. Wir nehmen daher an, dass die Matrix $M_S$ zwar zwischen den Kompensationen Z, Z' und ZM stabil bleibt, aber nicht notwendigerweise bekannt ist. Für die Sensoroffsets muss nichts angenommen werden.
Wie weiter oben hergeleitet, können die Kompensationen dann wie folgt mathematisch beschrieben werden:

$$b_{DE} = \frac{f_D}{\left|b_{EC}\right|} \times \left(M_s \times M_d\right)^{-1} \times \left(r - o_d - o_s\right) = M^{-1} \times \left(r - o\right)$$

Situation mit gleichen Umgebungsfeldstärken

Wir nehmen wie in den vorherigen Kapiteln an, dass vollständige hart- und weichmagnetische Kompensationen Z und Z' für das Gerät ohne Zusatzstörer vorhanden sind, plus eine Kompensation ZM für Gerät plus Zusatzstörer. Gesucht wird die Extrapolation dieser Resultate auf den Fall Z'M.
Werden alle Kompensationen am selben Ort vorgenommen, so erhalten wir (im besten Fall, bei unwesentlicher zeitlicher Änderung des lokalen Umgebungsfeldes) denselben Skalierungsfaktor. Dann gilt:

$$M_Z = \frac{\left|b_{EC}\right|}{f_D} \times M_s \times M_{dZ} = \frac{\left|b_{EC}\right|}{f_D} \times M_s \times \left(I + D_Z\right) \qquad o_Z = o_{dZ} + o_s = M_s \times b_{dZ} + o_s$$

$$M_{Z'} = \frac{\left|b_{EC}\right|}{f_D} \times M_s \times M_{dZ'} = \frac{\left|b_{EC}\right|}{f_D} \times M_s \times \left(I + D_{Z'}\right) \qquad o_{Z'} = o_{dZ'} + o_s = M_s \times b_{dZ'} + o_s$$

$$M_{ZM} = \frac{|b_{EC}|}{f_D} \times M_s \times M_{dZM} = \frac{|b_{EC}|}{f_D} \times M_s \times \left(I + D_Z + D_M\right)$$

$$o_{ZM} = o_{dZM} + o_s = M_s \times \left(b_{dZ} + b_{dM}\right) + o_s$$

Und gesucht wird:

$$M_{Z'M} = \frac{|b_{EC}|}{f_D} \times M_s \times M_{dZ'M} = \frac{|b_{EC}|}{f_D} \times M_s \times \left(I + D_{Z'} + D_M\right)$$

$$o_{Z'M} = o_{dZ'M} + o_s = M_s \times \left(b_{dZ'} + b_{dM}\right) + o_s$$

Dabei ergibt sich aber:

$$M_{Z'M} = \frac{|b_{EC}|}{f_D} \times M_s \times \left(I + D_{Z'} + D_{ZM}\right) = \frac{|b_{EC}|}{f_D} \times M_s \times \left(I + D_Z + D_{ZM} + \left(D_{Z'} - D_Z\right)\right)$$
$$= M_{ZM} + \left(M_{Z'} - M_Z\right)$$

und

$$o_{Z'M} = M_s \times \left(b_{dZ'} + b_{dM}\right) + o_s = M_s \times \left(b_{dZ} + b_{dM} + \left(b_{dZ'} - b_{dZ}\right)\right) + o_s = o_{ZM} + \left(o_{Z'} - o_Z\right),$$

womit die gestellte Aufgabe gelöst ist.

Situation mit verschiedenen Umgebungsfeldstärken

Wir nehmen wieder an, dass vollständige hart- und weichmagnetische Kompensationen Z und Z' für das Gerät ohne Zusatzstörer vorhanden sind, plus eine Kompensation ZM für Gerät mit Zusatzstörer. Gesucht wird die Extrapolation dieser Resultate auf den Fall Z'M.

Anders als im vorherigen Kapitel werden aber alle Kompensationen an verschiedenen Orten oder bei unterschiedlichen Umgebungsfeldern vorgenommen, so dass wir verschiedene Kompensationsfaktoren erhalten. Dies dürfte bei weitem der häufigste Fall sein. Dann gilt, unter Einführung der zusätzlichen Definition

$$f_k = \frac{|b_{EC}|}{f_D} \qquad k = Z, Z', ZM, ZM'$$

für weichmagnetische Gesamtmatrizen und hartmagnetische Offsets:

$$M_Z = f_Z \times M_s \times M_{dZ} = f_Z \times M_s \times \left(I + D_Z\right) \qquad o_Z = o_{dZ} + o_s = M_s \times b_{dZ} + o_s$$

$$M_{Z'} = f_{Z'} \times M_s \times M_{dZ'} = f_{Z'} \times M_s \times \left(I + D_{Z'}\right) \qquad o_{Z'} = o_{dZ'} + o_s = M_s \times b_{dZ'} + o_s$$

$$M_{ZM} = f_{ZM} \times M_s \times M_{dZM} = f_{ZM} \times M_s \times \left(I + D_{ZM}\right) \qquad o_{ZM} = o_{dZM} + o_s = M_s \times b_{dZM} + o_s$$

Und gesucht wird:

$$M_{Z'M} = f_{Z'M} \times M_s \times M_{dZ'M} = f_{Z'M} \times M_s \times (I + D_{Z'M}) \quad o_{Z'M} = o_{dZ'M} + o_s = M_s \times b_{dZ'M} + o_s$$

Zwar ergibt sich somit nach wie vor für die hartmagnetischen Gesamtoffsets:

$$o_{Z'M} = M_s \times b_{dZ'} + b_{dZM} + o_s = M_s \times b_{dZ} + b_{dM} + (b_{dZ'} - b_{dZ}) + o_s = o_{ZM} + (o_{Z'} - o_Z)$$

Aber die oben gezeigte einfache Addition und Subtraktion der weichmagnetischen Gesamtmatrizen ist nicht mehr möglich:

$$M_{Z'M} = f_{Z'M} \times M_s \times (I + D_{Z'} + D_{ZM}) = f_{Z'M} \times M_s \times (I + D_Z + D_{ZM} + (D_{Z'} - D_Z))$$

aber dies ist nicht mehr dasselbe wie:

$$M_{ZM} + (M_{Z'} - M_Z) = f_{ZM} \times M_s \times (I + D_Z + D_M) + f_{Z'} \times M_s \times (I + D_{Z'}) - f_Z \times M_s \times (I + D_Z)$$

$$= f_{ZM} \times M_s \times \left( I + D_Z + D_M + \left( \frac{f_{Z'}}{f_{ZM}} - \frac{f_Z}{f_{ZM}} \right) \times I + \frac{f_{Z'}}{f_{ZM}} \times D_{Z'} - \frac{f_Z}{f_{ZM}} \times D_Z \right)$$

$$= f_{ZM} \times M_s \times \left( I + D_Z + D_M + (D_{Z'} - D_Z) + \left( \frac{f_{Z'}}{f_{ZM}} - \frac{f_Z}{f_{ZM}} \right) \times I + \left( \frac{f_{Z'}}{f_{ZM}} - 1 \right) \times D_{Z'} - \left( \frac{f_Z}{f_{ZM}} - 1 \right) \times D_Z \right)$$

$$= f_{ZM} \times M_s \times \left( I + D_Z + D_M + (D_{Z'} - D_Z) + \left( \frac{f_{Z'}}{f_{ZM}} - \frac{f_Z}{f_{ZM}} \right) \times I + \left( \frac{f_{Z'}}{f_{ZM}} - 1 \right) \times D_{Z'} - \left( \frac{f_Z}{f_{ZM}} - 1 \right) \times D_Z \right)$$

$$= f_{ZM} \times M_s \times \left( I + D_{Z'} + D_M + \left( \frac{f_{Z'}}{f_{ZM}} - \frac{f_Z}{f_{ZM}} \right) \times I + \left( \frac{f_{Z'}}{f_{ZM}} - 1 \right) \times D_{Z'} - \left( \frac{f_Z}{f_{ZM}} - 1 \right) \times D_Z \right)$$

$$= \left( \frac{f_{Z'}}{f_{ZM}} - \frac{f_Z}{f_{ZM}} \right) \times \left( M_{Z'M} + f_{Z'M} \times M_s \times \left( \frac{f_{Z'}}{f_{ZM}} - \frac{f_Z}{f_{ZM}} \right) \times I + f_{Z'M} \times M_s \times \left( \left( \frac{f_{Z'}}{f_{ZM}} - 1 \right) \times D_{Z'} - \left( \frac{f_Z}{f_{ZM}} - 1 \right) \times D_Z \right) \right)$$

Wir erhalten also zusätzliche, unkorrekte weichmagnetische Anteile.

Eine allgemeine Lösung ist nicht möglich, jedoch kann eine Näherung verwendet werden. Typischerweise sind die weichmagnetischen Effekte relativ klein, im Bereich 1E-2 des Erdmagnetfeldes.

Aus der Matrizenrechnung ist die folgende Reihenentwicklung bekannt, in Analogie zur bekannten Taylorreihe der entsprechenden skalaren Formel:

$$(I + D)^{-1} = I - D + D^2 - D^3 \pm ... \approx I - D \text{ ,}$$

wobei die Terme für Elemente von D im Bereich 1E-2 die Terme $D^n$ entsprechend von der Grössenordnung 1E-2$\times$n sind, also der Fehler infolge weggelassener Terme für die angegebene lineare Näherung im Bereich 1E-4 liegt.

Damit ergibt sich aber:

$$M = M_{ZM} \times M_Z^{-1} \times M_{Z'}$$

$$= f_{ZM} \times M_s \times (I + D_Z + D_M) \times (f_Z \times M_s \times (I + D_Z))^{-1} \times f_{Z'} \times M_s \times (I + D_{Z'})$$

$$= \frac{f_{Z'}}{f_Z} \times f_{ZM} \times M_s \times (I + D_Z + D_M) \times (I + D_Z)^{-1} \times (I + D_{Z'})$$

$$\approx \frac{f_{Z'}}{f_Z} \times f_{ZM} \times M_s \times (I + D_Z + D_M) \times (I - D_Z) \times (I + D_{Z'})$$

$$\approx \frac{f_{Z'}}{f_Z} \times f_{ZM} \times M_s \times (I + D_Z + D_M - D_Z + D_{Z'}) = \frac{f_{Z'}}{f_Z} \times f_{ZM} \times M_s \times (I + D_{Z'} + D_M)$$

$$= \frac{f_{Z'}}{f_Z} \times M_{Z'M}$$

Der zusätzliche Faktor $f_{Z'}/f_Z$ ist für die Verwendung zur Richtungsfindung unwesentlich. Sofern die Z, Z' Messungen am selben Ort stattfanden (zum Beispiel im Rahmen einer Werkskalibration), ist er Eins.

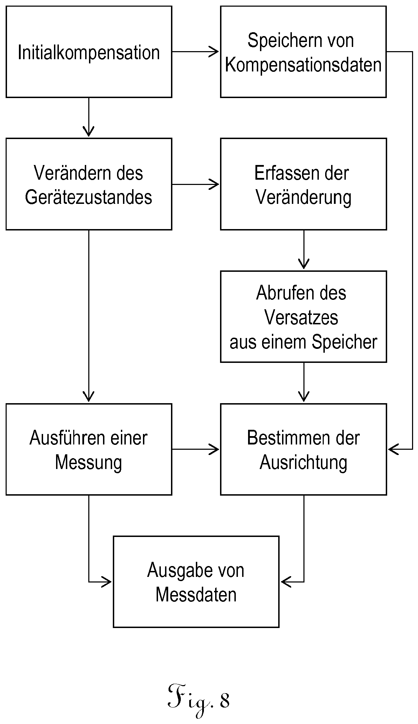

Figur 8 zeigt ein Flussdiagramm zur Illustration eines beispielhaften Verfahrens zum Bestimmen einer azimutalen Ausrichtung. Dieses beginnt mit einer Initialkompensation des Magnetkompasses am Ort der Messung. Entsprechende Kompensationsdaten werden gespeichert. Wird nun der Betriebszustand so geändert, dass sich das gerätefeste Störfeld verändert, wird dies vom Gerät erfasst (z. B. automatisch oder durch Benutzereingabe). Abhängig von der Veränderung wird ein entsprechender Versatzwert, der die Veränderung des gerätefesten Störfeldes repräsentiert und beispielsweise ab Werk in einem Speicher des Gerätes hinterlegt ist, aus diesem Speicher abgerufen, sobald die eigentliche Messung erfolgt. Unter Berücksichtigung der ursprünglichen Kompensationsdaten und des Versatzes kann dann die Ausrichtung bestimmt werden, ohne dass eine erneute Kompensation erfolgen muss. Die Ausrichtung wird zur Berechnung der Messdaten herangezogen, die dem Benutzer angezeigt werden. Dieses Verfahren berücksichtigt aber nicht, dass das Gerät auch verschiedene Anwendungszustände mit unterschiedlichen externen Störfeldern einnehmen kann.

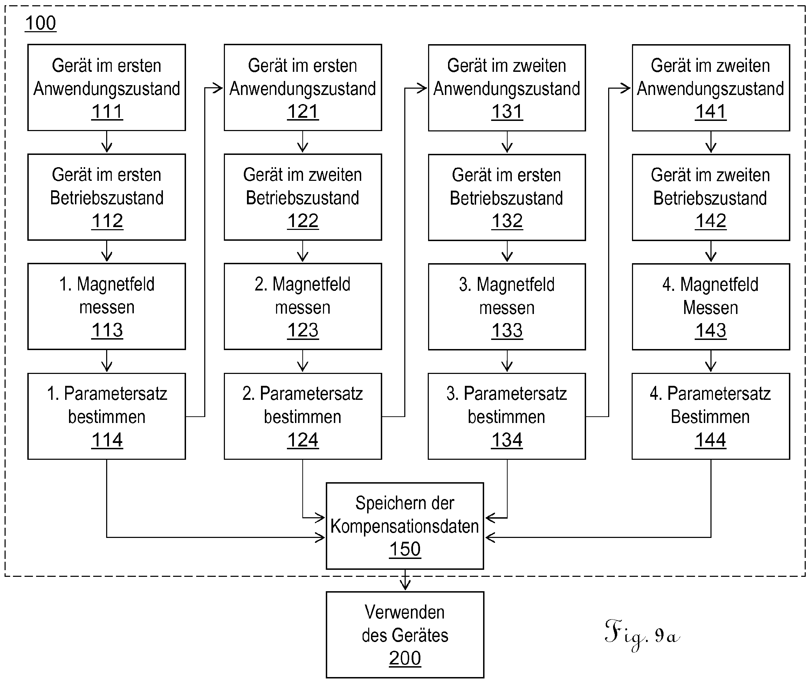

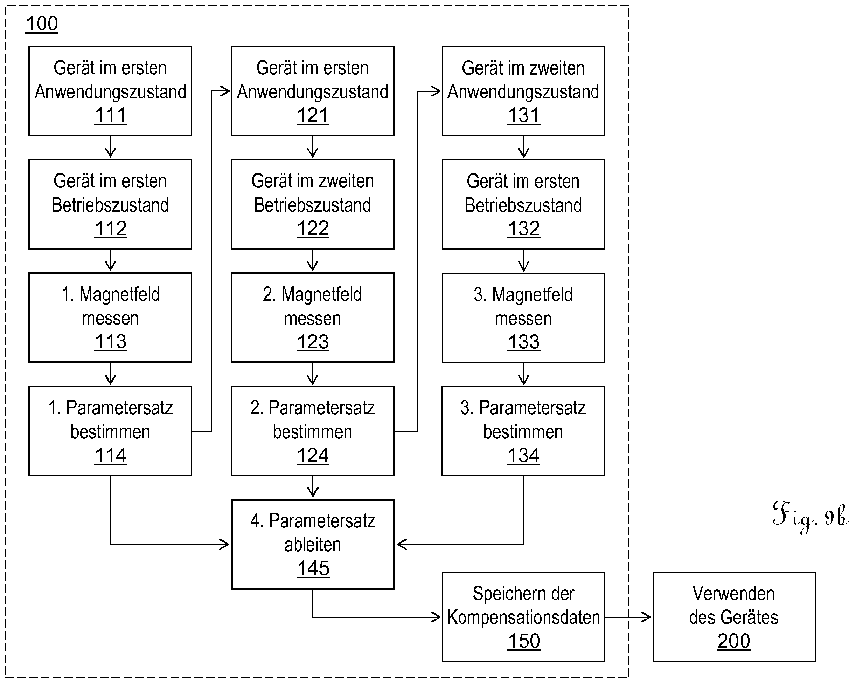

Die Figuren 9a und 9b illustrieren eine Initialkompensation des Magnetkompasses bei jeweils mehreren Anwendungs- und Betriebszuständen des Gerätes. Dabei wird der Übersichtlichkeit halber der einfachste Fall dargestellt, bei dem das Gerät zwei Anwendungszustände und zwei Betriebszustände einnimmt, also insgesamt $2 \times 2 = 4$ Gesamtzustände. Mit einer steigenden Zahl an möglichen Betriebs- und/oder Anwendungszuständen steigt entsprechend die Zahl der aus vorhandenen Parametersätzen ermittelbaren Parametersätze, für die keine Messung vonnöten ist.

In Figur 9a wird zunächst eine Initialkompensation 100 gezeigt, bei alle vier notwendigen Kompensationen wie herkömmlich durchgeführt werden. Zunächst befindet sich das Gerät im ersten Anwendungszustand 111 und im ersten Betriebszustand 112. Beispielsweise ist das Gerät also im unmontierten, handgehaltenen Zustand (erster Anwendungszustand 111), und eine Infrarotsichteinrichtung des Gerätes ist ausgeschaltet (erster Betriebszustand 112). In diesem ersten Gesamtzustand werden nun durch den Magnetkompass ein erstes Magnetfeld gemessen 113 und darauf basierend durch eine Recheneinheit ein erster Parametersatz bestimmt 114. Dieser Parametersatz, der Informationen über das erste Magnetfeld des ersten Gesamtzustandes enthält, wird dann in einem Datenspeicher der Kompensationseinrichtung gespeichert 150.

Danach wird das Gerät in einen zweiten Betriebszustand versetzt 122, insbesondere manuell durch einen Benutzer. Der Anwendungszustand bleibt zunächst unverändert 121. Beispielsweise ist das Gerät also weiterhin im handgehaltenen Zustand (unmontiert), aber die Infrarotsichteinrichtung ist nun eingeschaltet, was ein gerätefestes Störfeld erzeugt. In diesem zweiten Gesamtzustand werden nun ein zweites Magnetfeld gemessen 123 und darauf basierend ein zweiter Parametersatz bestimmt 124. Letzterer wird gespeichert 150.

Anschliessend wird das Gerät in einen zweiten Anwendungszustand versetzt 131, also beispielsweise auf ein externes Gerät montiert, das ein externes magnetisches Störfeld erzeugt. Der erste Betriebszustand wird wiederhergestellt 132. In diesem dritten Gesamtzustand werden nun ein drittes Magnetfeld gemessen 133 und darauf basierend ein dritter Parametersatz bestimmt 134. Letzterer wird gespeichert 150.

Daraufhin wird das Gerät im zweiten Anwendungszustand belassen 141, bleibt also beispielsweise montiert, und der zweite Betriebszustand wird erneut hergestellt 142. In diesem vierten Gesamtzustand werden nun ein viertes Magnetfeld gemessen 143 und darauf basierend ein vierter Parametersatz bestimmt 144. Letzterer wird gespeichert 150.

Nachdem für jeden möglichen Gesamtzustand ein entsprechender Parametersatz vorhanden ist, ist die Initialkompensation 100 abgeschlossen, und das Gerät kann bestimmungsgemäss verwendet werden 200.

In Figur 9b wird eine Initialkompensation 100 gezeigt, die in einem erfindungsgemässen Verfahren verwendbar ist. Wie oben mit Bezug zu Figur 9a beschrieben, werden zunächst nacheinander drei Gesamtzustände des Gerätes hergestellt (Schritte 111, 112, 121, 122, 131, 132), wobei jeweils ein erstes, zweites und drittes Magnetfeld gemessen werden (Schritte 113, 123, 133) und entsprechende Parametersätze ermittelt (Schritte 114, 124, 134) und gespeichert werden 150. Vorteilhaft entfällt hier erfindungsgemäss die Messung im vierten Gesamtzustand. Statt dessen kann wie weiter oben dargestellt aus den drei bekannten Parametersätzen der vierte Parametersatz abgeleitet 145 werden. Dieser entspricht dem in Figur 9a aus dem vierten gemessenen Magnetfeld ermittelten Parametersatz und enthält dementsprechend Informationen über das vierte Magnetfeld des vierten Gesamtzustandes, ohne dass dieser Gesamtzustand im Rahmen der Initialkompensation 100 hergestellt werden musste oder das entsprechende Magnetfeld gemessen werden musste. Der vierte Parametersatz wird abgespeichert 150, womit die Initialkompensation 100 abgeschlossen ist, und das Gerät bestimmungsgemäss (d. h. wie z. B. in Figur 3 gezeigt) verwendet 200 werden kann.

**Patentansprüche**

1. Optoelektronisches Messgerät (1) mit einem elektronischen Magnetkompass (10) zum Bestimmen einer azimutalen Ausrichtung (a) des Messgeräts (1) und einer dem Magnetkompass (10) zugeordneten Kompensationseinrichtung (50) zum Kompensieren gerätefester Störfelder, wobei

   - das Messgerät (1) dazu ausgestaltet ist, mindestens zwei definierte, wiederholbare Betriebszustände einzunehmen, wobei das Messgerät (1) in jedem der Betriebszustände ein unterschiedliches gerätefestes Störfeld aufweist, und
   - die Kompensationseinrichtung (50) eine Recheneinheit und einen Datenspeicher aufweist sowie eine Kompensationsfunktionalität zum Durchführen einer Initialkompensation (100) des elektronischen Magnetkompasses (10) in einem ersten und einem zweiten Betriebszustand des Messgerätes (1),

   **dadurch gekennzeichnet, dass**

   - das Messgerät (1) dazu ausgestaltet ist, mindestens zwei definierte, wiederholbare Anwendungszustände einzunehmen, wobei der Magnetkompass (10) in jedem der Anwendungszustände einem unterschiedlichen externen magnetischen Störfeld ausgesetzt ist, und
   - die Kompensationseinrichtung (50) zusätzlich zum Kompensieren der externen Störfelder ausgestaltet ist,

   wobei die Kompensationseinrichtung (50) dazu ausgestaltet ist, im Rahmen der Kompensationsfunktionalität zum Durchführen der Initialkompensation (100)

   - mittels des Magnetkompasses

     - einen ersten Magnetfeldsatz in einem ersten Gesamtzustand des Messgerätes (1) zu messen (113), in dem das Messgerät (1) den ersten Betriebszustand und einen ersten Anwendungszustand einnimmt,
     - einen zweiten Magnetfeldsatz in einem zweiten Gesamtzustand des Messgerätes (1) zu messen (123), in dem das Messgerät (1) den zweiten Betriebszustand und den ersten Anwendungszustand einnimmt, und
     - einen dritten Magnetfeldsatz in einem dritten Gesamtzustand des Messgerätes (1) zu messen (133), in dem das Messgerät (1) den ersten Betriebszustand und einen zweiten Anwendungszustand einnimmt; und

   - durch die Recheneinheit

     - jeweils basierend auf dem ersten, zweiten und dritten Magnetfeldsatz einen ersten, zweiten und dritten. Parametersatz zu bestimmen (114, 124, 134), und
     - basierend auf dem ersten, zweiten und dritten Parametersatz einen vierten Parametersatz abzuleiten (145); und

   - den ersten, zweiten, dritten und vierten Parametersatz in dem Datenspeicher der Kompensationseinrichtung (50) abzuspeichern (150), wobei der abgeleitete vierte Parametersatz einem Parametersatz entspricht, der basierend auf einem vierten Magnetfeldsatz bestimmbar ist, der in einem vierten Gesamtzustand des Messgerätes (1), in dem das Messgerät (1) den zweiten Betriebszustand und den zweiten Anwendungszustand einnimmt, messbar ist.

2. Messgerät (1) nach Anspruch 1,

**dadurch gekennzeichnet, dass**

das Messgerät (1) ein handhaltbares optoelektronisches Beobachtungsgerät ist, insbesondere aufweisend

- eine Anzeigeeinheit zum Anzeigen von Messdaten, insbesondere aufweisend die azimutale Ausrichtung (a), und/oder
- eine Schnittstelle zum Bereitstellen eines Signals, das Information über die azimutale Ausrichtung (a) umfasst, für einen externen Empfänger, insbesondere ein Geographisches Informationssystem, eine militärische Feuerleiteinrichtung oder ein handhaltbares Datenverarbeitungsgerät.

3.  Messgerät (1) nach einem der vorangehenden Ansprüche,
**dadurch gekennzeichnet, dass**
der Magnetkompass (10) mindestens drei gerätefest angeordnete Magnetfeldsensoren zum drei-dimensionalen Messen eines Magnetfelds (M) und zwei Neigungssensoren zum Messen der Richtung des Gravitationsfelds (G) aufweist.

4.  Messgerät (1) nach einem der vorangehenden Ansprüche,
**dadurch gekennzeichnet, dass**
das Messgerät (1) dazu ausgestaltet ist, an einem externen Gerät (80, 81, 82) angebracht zu werden, das ein externes Störfeld erzeugt, und in mindestens einem der mindestens zwei Anwendungszustände an dem externen Gerät (80, 81, 82) angebracht ist, wobei der erste und der zweite Anwendungszustand des Messgerätes (1) sich hinsichtlich des externen Störfeldes des externen Gerätes (80, 81, 82) voneinander unterscheiden.

5.  Messgerät (1) nach Anspruch 4,
**dadurch gekennzeichnet, dass**
das Messgerät (1) dazu ausgestaltet ist,

- an verschiedenen externen Geräten (80, 81, 82) angebracht zu werden, die unterschiedliche externe Störfelder erzeugen, und/oder
- an einem externen Gerät (80, 81, 82) angebracht zu werden, das dazu ausgestaltet ist, mindestens zwei definierte, wiederholbare Zustände einzunehmen, wobei das externe Gerät in jedem der Zustände ein unterschiedliches externes Störfeld erzeugt.

6.  Messgerät (1) nach einem der vorangehenden Ansprüche,
**dadurch gekennzeichnet, dass**
die Kompensationseinrichtung (50) eine Erfassungseinheit zum Erfassen eines aktuellen Betriebszustandes und/oder Anwendungszustandes des Messgerätes (1) aufweist, insbesondere wobei die Erfassungseinheit dazu ausgestaltet ist den aktuellen Betriebszustand bzw. Anwendungszustand automatisch zu erfassen.

7.  Messgerät (1) nach Anspruch 6,
**dadurch gekennzeichnet, dass**
die Erfassungseinheit dazu ausgestaltet ist,

- eine Datenverbindung mit dem externen Gerät (80, 81, 82) herzustellen,
- Daten über einen aktuellen Zustand des externen Gerätes (80, 81, 82) mittels der Datenverbindung zu empfangen, und
- den aktuellen Anwendungszustand des Messgerätes (1) basierend auf den Daten über den aktuellen Zustand des externen Gerätes (80, 81, 82) zu ermitteln.

8.  Messgerät (1) nach Anspruch 6 oder Anspruch 7,
**dadurch gekennzeichnet, dass**

- der erste und der zweite Betriebszustand des Messgerätes (1) sich zumindest hinsichtlich eines aktuellen Zustandes eines zuschaltbaren elektrischen Systems des Messgerätes (1) voneinander unterscheiden, insbesondere darin, dass das elektrische System des Messgerätes (1) ein- bzw. ausgeschaltet ist, und
- die Erfassungseinheit zum Erkennen eines aktuellen Zustandes des elektrischen Systems ausgestaltet ist.

9.  Messgerät (1) nach Anspruch 8,
**dadurch gekennzeichnet, dass**

- der erste und der zweite Betriebszustand des Messgerätes (1) sich in einer aktuellen Stromstärke und/oder Spannung in dem elektrischen System voneinander unterscheiden, und
- die Erfassungseinheit zum Ermitteln einer aktuellen Stromstärke und/oder Spannung in dem elektrischen System ausgestaltet ist.

**10.** Messgerät (1) nach einem der vorangehenden Ansprüche,
**gekennzeichnet durch**
mindestens ein hart- oder weichmagnetisches Bauteil, das dazu ausgestaltet ist, mindestens zwei unterschiedliche Positionen im oder am Messgerät (1) einzunehmen, wobei der erste und der zweite Betriebszustand sich darin voneinander unterscheiden, dass das hart- oder weichmagnetische Bauteil jeweils eine andere Position aufweist, insbesondere wobei das hart- oder weichmagnetische Bauteil

- ein mechanischer Schalter (40, 44), insbesondere ein von einem Benutzer zu betätigender Kipp-, Dreh- oder Schiebeschalter ist, oder
- ein motorisiert verfahrbares Element ist, insbesondere im Rahmen eines Zoom-Vorgangs verfahrbares optisches Element (32).

**11.** Verfahren zur Kompensation eines Magnetkompasses (10), wobei der Magnetkompass Teil eines optoelektronischen Messgerätes (1) ist, insbesondere nach einem der vorangehenden Ansprüche, wobei das Messgerät (1) dazu ausgestaltet ist, mindestens zwei definierte, wiederholbare Betriebszustände und mindestens zwei definierte, wiederholbare Anwendungszustände einzunehmen, wobei das Messgerät (1) in jedem der Betriebszustände ein unterschiedliches gerätefestes magnetisches Störfeld aufweist, und der Magnetkompass (10) in jedem der Anwendungszustände einem unterschiedlichen externen magnetischen Störfeld ausgesetzt ist, wobei das Verfahren aufweist

- ein Messen (113) eines ersten Magnetfeldsatzes mittels des Magnetkompasses (10) in einem ersten Gesamtzustand des Messgerätes (1), in dem das Messgerät (1) einen ersten Betriebszustand und einen ersten Anwendungszustand einnimmt,
- ein Bestimmen (114) eines ersten Parametersatzes basierend auf dem ersten Magnetfeldsatz,
- ein Messen (123) eines zweiten Magnetfeldsatzes mittels des Magnetkompasses (10) in einem zweiten Gesamtzustand des Messgerätes (1), in dem das Messgerät (1) einen zweiten Betriebszustand und den ersten Anwendungszustand einnimmt, und
- ein Bestimmen (124) eines zweiten Parametersatzes basierend auf dem zweiten Magnetfeldsatz,

**gekennzeichnet durch**

- ein Messen (133) eines dritten Magnetfeldsatzes mittels des Magnetkompasses (10) in einem dritten Gesamtzustand des Messgerätes (1), in dem das Messgerät (1) den ersten Betriebszustand und einen zweiten Anwendungszustand einnimmt,
- ein Bestimmen (134) eines dritten Parametersatzes basierend auf dem dritten Magnetfeldsatz,
- ein Ableiten (145) eines vierten Parametersatzes basierend auf dem ersten, zweiten und dritten Parametersatz, und
- ein Speichern (150) des ersten, zweiten, dritten und vierten Parametersatzes in einem Datenspeicher, wobei der abgeleitete vierte Parametersatz einem Parametersatz entspricht, der basierend auf einem vierten Magnetfeldsatz bestimmbar ist, der in einem vierten Gesamtzustand des Messgerätes (1), in dem das Messgerät (1) den zweiten Betriebszustand und den zweiten Anwendungszustand einnimmt, messbar ist.

**12.** Verfahren nach Anspruch 11,
**dadurch gekennzeichnet, dass**
das externe magnetische Störfeld durch ein Anbringen des Gerätes an einem externen Gerät (80, 81, 82) bewirkt wird, insbesondere wobei das externe Gerät (80, 81, 82) das externe magnetische Störfeld erzeugt.

**13.** Verfahren nach Anspruch 11,
**dadurch gekennzeichnet, dass**
das externe magnetische Störfeld durch eine Zustandsänderung an einem externen Gerät (80, 81, 82) an dem das Gerät angebracht ist, bewirkt wird, insbesondere wobei das externe Gerät (80, 81, 82) das externe magnetische Störfeld erzeugt.

**14.** Verfahren nach einem der Ansprüche 11 bis 13,
**gekennzeichnet durch**
ein automatisches Erkennen des ersten und zweiten Betriebszustandes des Gerätes, insbesondere aufweisend ein Erkennen

- eines aktuellen Zustandes eines elektrischen Systems des Gerätes, und/oder
- einer aktuellen Position (44) eines hart- oder weichmagnetischen Bauteiles des Gerätes.

**15.** Computerprogrammprodukt mit Programmcode, der auf einem maschinenlesbaren Träger gespeichert ist, zur Ausführung des Verfahrens nach Anspruch 11, wenn das Programm auf einer als Kompensationseinrichtung (50) des Messgerätes (1) nach einem der Ansprüche 1 bis 10 ausgebildeten elektronischen Datenverarbeitungseinheit ausgeführt wird.

**Claims**

**1.** Optoelectronic measuring device (1) having an electronic magnetic compass (10) for determining an azimuthal orientation (a) of the measuring device (1) and a compensation device (50) associated with the magnetic compass (10) for compensating device-fixed interference fields, wherein

- the measuring device (1) is designed to occupy at least two defined, repeatable operating states, wherein the measuring device (1) has a different device-fixed interference field in each of the operating states, and
- the compensation device (50) has a computing unit and a memory, and a compensation functionality for carrying out an initial compensation (100) of the electronic magnetic compass (10) in a first and a second operating state of the measuring device (1)

**characterized in that**

- the measuring device (1) is designed to occupy at least two defined, repeatable application states, wherein in each of the application states the magnetic compass (10) is exposed to a different external magnetic interference field, and
- the compensation device (50) is additionally designed to compensate for the external interference fields,

wherein the compensation device (50) is designed, in the context of the compensation functionality for carrying out the initial compensation (100),

- by means of the magnetic compass:

  ▪ to measure (113) a first magnetic field set in a first overall state of the measuring device (1), in which the measuring device (1) occupies the first operating state and a first application state,
  ▪ to measure (123) a second magnetic field set in a second overall state of the measuring device (1), in which the measuring device (1) occupies the second operating state and the first application state,
  ▪ to measure (133) a third magnetic field set in a third overall state of the measuring device (1), in which the measuring device (1) occupies the first operating state and a second application state; and

- by means of the processing unit:

  ▪ to determine, based on the first, second and third magnetic field set, a first, second and third parameter set (114, 124, 134) respectively, and
  ▪ to derive a fourth parameter set (145) based on the first, second and third parameter set; and

- to store (150) the first, second, third and fourth parameter set in the memory of compensation device (50),

wherein the derived fourth parameter set corresponds to a parameter set that can be determined based on a fourth magnetic field set, which is measurable in a fourth overall state of the measuring device (1), in which the measuring device (1) occupies the second operating state and the second application state.

**2.** The measuring device (1) according to claim 1,

**characterized in that**
the measuring device (1) is a hand-held optoelectronic monitoring device, in particular having

- a display unit for displaying measurement data, in particular having the azimuthal orientation (a), and/or
- an interface for providing a signal, which comprises information about the azimuthal alignment (a), for an external receiver, in particular a Geographic Information System, a military firing control device or a hand-held data processing device.

3. The measuring device (1) according to any one of the preceding claims,
**characterized in that**
the magnetic compass (10) has at least three device-fixed magnetic field sensors for the three-dimensional measuring a magnetic field (M) and two inclination sensors for measuring the direction of the gravitational field (G).

4. The measuring device (1) according to any one of the preceding claims,

**characterized in that**
the measuring device (1) is designed to be mounted on an external device (80, 81, 82) which generates an external interference field, and is mounted on the external device (80, 81, 82) in at least one of the at least two application states actual, wherein
the first and the second application state of the measuring device (1) differ from each other with regard to the external interference field of the external device (80, 81, 82).

5. The measuring device (1) according to claim 4, **characterized in that**
the measuring device (1) designed

- to be mounted on different external devices (80, 81, 82) which generate different external interference fields, and/or
- to be mounted on an external device (80, 81, 82), which is designed to occupy at least two defined, repeatable states, wherein the external device generates a different external interference field in each of the states.

6. The measuring device (1) according to any one of the preceding claims,
**characterized in that**
the compensation device (50) has a detection device for detecting a current operating state and/or application state of the measuring device (1), in particular wherein the detection device is designed to detect the current operating state and/or application state automatically.

7. The measuring device (1) according to claim 6,
**characterized in that**
the detection unit is designed

- to establish a data connection to the external device (80, 81, 82),
- to receive data on a current state of the external device (80, 81, 82) by means of the data connection, and
- to determine the current application state of the measuring device (1) based on the data about the current state of the external device (80, 81, 82).

8. The measuring device (1) according to claim 6 or claim 7,
**characterized in that**

- the first and the second operating state of the measuring device (1) differ from each other at least with regard to a current state of a selectable electrical system of the measuring device (1), in particular in the fact that the electrical system of the measuring device (1) is switched either on or off, and
- the detection unit is designed to detect a current state of the electrical system.

9. The measuring device (1) according to claim 8,
**characterized in that**

- the first and the second operating state of the measuring device (1) differ from each other in a current amplitude and/or voltage currently present in the electrical system, and

- the detection unit is designed to determine a current amplitude and/or voltage currently present in the electrical system.

10. The measuring device (1) as claimed in any one of the preceding claims,
    **characterized by**
    at least one hard- or soft-magnetic component, which is designed to occupy at least two different positions in or on the measuring device (1), wherein the first and the second operating state differ from each other in that the hard- or soft-magnetic component each have a different position, in particular wherein the hard- or soft-magnetic component

    - is a mechanical switch (40, 44), in particular a toggle, rotary or sliding switch to be operated by a user, or
    - is a motorized movable element, in particular an optical element (32) that is movable as part of a zoom operation.

11. A method for compensating a magnetic compass (10), wherein the magnetic compass is part of an optoelectronic measuring device (1), in particular according to any one of the preceding claims, wherein the measuring device (1) is designed to occupy at least two defined, repeatable operating states and at least two defined, repeatable application states, wherein the measuring device (1)has a different device-fixed magnetic interference field in each of the operating states, and the magnetic compass is in each application states under the influence of different external interference fields, said method comprises

    - measuring (113) a first magnetic field set using the magnetic compass (10) in a first overall state of the measuring device (1), in which the measuring device (1) occupies the first operating state and a first application state,
    - determining (114) a first parameter set based on the first magnetic field set,
    - measuring (123) a second magnetic field set using the magnetic compass (10) in a second overall state of the measuring device (1), in which the measuring device (1) occupies the second operating state and the first application state,
    - determining (124) a second parameter set based on the second magnetic field set,
    **characterized by**
    - measuring (133) a third magnetic field set using the magnetic compass (10) in a third overall state of the measuring device (1), in which the measuring device (1) occupies the first operating state and the second application state,
    - determining (134) a third parameter set based on the third magnetic field set,
    - deriving (145) a fourth parameter set based on the first, second and third parameter set, and
    - storing (150) the first, second, third and fourth parameter set in the memory of compensation device (50),

    wherein the derived fourth parameter set corresponds to a parameter set, which can be determined based on a fourth magnetic field set, which is measurable in a forth overall state of the measuring device (1), in which the measuring device (1) occupies the second operating state and the second application state.

12. The method as claimed in claim 11,

    **wherein**
    the external magnetic interference field is effected by a mounting of the device on an external device (80, 81, 82), in particular wherein the external device (80, 81, 82) generates the external magnetic interference field.

13. The method as claimed in claim 11,

    **wherein**
    the external magnetic interference field is effected by a change of state on an external device (80, 81, 82), on which the device is mounted, in particular wherein the external device (80, 81, 82) generates the external magnetic interference field.

14. The method as claimed in any one of claims 11 to 13,
    **characterized by**
    an automatic detection of the first and second operating state of the device, in particular comprising a detection of

    - a current state of an electrical system of the device, and/or
    - a current position (44) of a hard- or soft-magnetic component of the device.

15. A computer program product with program code, which is stored on a machine-readable medium, for executing the method as claimed in claim 11, when the program is executed on an electronic data processing unit designed as a compensation device (50) of the measuring device (1) according to any one of claims 1 to 10.

**Revendications**

1. Appareil de mesure optoélectronique (1) avec un compas magnétique électronique (10) pour déterminer une orientation azimutale (a) de l'appareil de mesure (1) et un dispositif de compensation (50) associé au compas magnétique (10) pour compenser les champs perturbateurs liés à l'appareil, dans lequel

   - l'appareil de mesure (1) est conçu pour prendre au moins deux états de fonctionnement définis et répétables, l'appareil de mesure (1) présentant dans chacun des états de fonctionnement un champ perturbateur lié à l'appareil différent, et
   - le dispositif de compensation (50) présente une unité de calcul et une mémoire de données ainsi qu'une fonctionnalité de compensation pour effectuer une compensation initiale (100) du compas magnétique électronique (10) dans un premier et un deuxième état de fonctionnement de l'appareil de mesure (1),

   **caractérisé en ce que**

   - l'appareil de mesure (1) est conçu pour prendre au moins deux états d'utilisation définis et répétables, le compas magnétique (10) étant exposé à un champ magnétique perturbateur externe différent dans chacun des états d'utilisation, et
   - le dispositif de compensation (50) est en outre conçu pour compenser les champs perturbateurs externes,

   le dispositif de compensation (50) étant conçu, dans le cadre de la fonctionnalité de compensation, pour effectuer la compensation initiale (100)

   - au moyen du compas magnétique :

     ▪ mesurer (113) un premier ensemble de champs magnétiques dans un premier état général de l'appareil de mesure (1) dans lequel l'appareil de mesure (1) prend le premier état de fonctionnement et un premier état d'utilisation,
     ▪ mesurer (123) un deuxième ensemble de champs magnétiques dans un deuxième état général de l'appareil de mesure (1) dans lequel l'appareil de mesure (1) occupe le deuxième état de fonctionnement et le premier état d'utilisation, et
     ▪ mesurer (133) un troisième ensemble de champs magnétiques dans un troisième état général de l'appareil de mesure (1) dans lequel l'appareil de mesure (1) occupe le premier état de fonctionnement et un deuxième état d'utilisation ; et

   - par l'unité de calcul :

     ▪ déterminer (114, 124, 134) un premier, un deuxième et un troisième ensemble de paramètres sur la base du premier, du deuxième et du troisième ensemble de champs magnétiques, respectivement, et
     ▪ déduire (145) un quatrième ensemble de paramètres sur la base du premier, du deuxième et du troisième ensemble de paramètres ; et

   - stocker (150) le premier, le deuxième, le troisième et le quatrième ensemble de paramètres dans la mémoire de données du dispositif de compensation (50),

   le quatrième ensemble de paramètres déduit correspondant à un ensemble de paramètres qui peut être déterminé sur la base d'un quatrième ensemble de champs magnétiques qui peut être mesuré dans un quatrième état général de l'appareil de mesure (1) dans lequel l'appareil de mesure (1) prend le deuxième état de fonctionnement et le deuxième état d'utilisation.

2. Appareil de mesure (1) selon la revendication 1,
   **caractérisé en ce que**
   l'appareil de mesure (1) est un appareil d'observation optoélectronique portable, présentant en particulier :

- une unité d'affichage pour afficher des données de mesure, présentant en particulier l'orientation azimutale (a), et/ou
- une interface pour fournir un signal comprenant l'information sur l'orientation azimutale (a) à un récepteur externe, en particulier un système d'information géographique, un dispositif de conduite de tir militaire ou un appareil de traitement de données portable.

3. Appareil de mesure (1) selon l'une des revendications précédentes,
   **caractérisé en ce que**
   le compas magnétique (10) présente au moins trois capteurs de champ magnétique disposés de manière fixe sur l'appareil pour la mesure tridimensionnelle d'un champ magnétique (M) et deux capteurs d'inclinaison pour la mesure de la direction du champ gravitationnel (G).

4. Appareil de mesure (1) selon l'une des revendications précédentes,

   **caractérisé en ce que**
   l'appareil de mesure (1) est conçu pour être monté sur un appareil externe (80, 81, 82) qui génère un champ perturbateur externe et est monté sur l'appareil externe (80, 81, 82) dans au moins l'un desdits au moins deux états d'utilisation,
   le premier et le deuxième état d'utilisation de l'appareil de mesure (1) étant différents l'un de l'autre en ce qui concerne le champ perturbateur externe de l'appareil externe (80, 81, 82).

5. Appareil de mesure (1) selon la revendication 4,
   **caractérisé en ce que**
   l'appareil de mesure (1) est conçu pour :

   - être monté sur différents appareils externes (80, 81, 82) qui génèrent des champs perturbateurs externes différents, et/ou
   - être monté sur un appareil externe (80, 81, 82) qui est conçu pour prendre au moins deux états définis et répétables, l'appareil externe générant un champ perturbateur externe différent dans chacun des états.

6. Appareil de mesure (1) selon l'une des revendications précédentes,
   **caractérisé en ce que**
   le dispositif de compensation (50) présente une unité de détection pour détecter un état de fonctionnement actuel et/ou un état d'utilisation actuel de l'appareil de mesure (1), en particulier l'unité de détection étant configurée pour détecter automatiquement l'état de fonctionnement actuel ou l'état d'utilisation actuel.

7. Appareil de mesure (1) selon la revendication 6,
   **caractérisé en ce que**
   l'unité de détection est conçue pour :

   - établir une liaison de données avec l'appareil externe (80, 81, 82),
   - recevoir des données sur un état actuel de l'appareil externe (80, 81, 82) au moyen de la liaison de données, et
   - déterminer l'état d'utilisation actuel de l'appareil de mesure (1) sur la base des données sur l'état actuel de l'appareil externe (80, 81, 82).

8. Appareil de mesure (1) selon la revendication 6 ou la revendication 7,
   **caractérisé en ce que**

   - le premier et le deuxième état de fonctionnement de l'appareil de mesure (1) diffèrent l'un de l'autre au moins en ce qui concerne un état actuel d'un système électrique activable de l'appareil de mesure (1), en particulier **en ce que** le système électrique de l'appareil de mesure (1) est activé ou désactivé, et
   - l'unité de détection est conçue pour reconnaître un état actuel du système électrique.

9. Appareil de mesure (1) selon la revendication 8,
   **caractérisé en ce que**

   - le premier et le deuxième état de fonctionnement de l'appareil de mesure (1) diffèrent l'un de l'autre par une intensité de courant et/ou une tension actuelle dans le système électrique, et

- l'unité de détection est conçue pour déterminer une intensité de courant et/ou une tension actuelle dans le système électrique.

**10.** Appareil de mesure (1) selon l'une des revendications précédentes,
   **caractérisé par**
   au moins un composant magnétique dur ou doux qui est conçu pour prendre au moins deux positions différentes dans ou sur l'appareil de mesure (1), le premier et le deuxième état de fonctionnement différant l'un de l'autre en ce que le composant magnétique dur ou doux présente à chaque fois une position différente, en particulier le composant magnétique dur ou doux

   - étant un commutateur mécanique (40, 44), en particulier un commutateur basculant, rotatif ou coulissant à actionner par un utilisateur, ou
   - étant un élément déplaçable motorisé, en particulier un élément optique (32) déplaçable dans le cadre d'une opération de zoom.

**11.** Procédé de compensation d'un compas magnétique (10), le compas magnétique faisant partie d'un appareil de mesure optoélectronique (1), en particulier selon l'une des revendications précédentes, l'appareil de mesure (1) étant conçu pour prendre au moins deux états de fonctionnement définis et répétables et au moins deux états d'utilisation définis et répétables, l'appareil de mesure (1) présentant dans chacun des états de fonctionnement un champ magnétique perturbateur lié à l'appareil différent, et le compas magnétique (10) étant exposé à un champ magnétique perturbateur externe différent dans chacun des états d'utilisation, le procédé présentant les étapes consistant à :

   - mesurer (113) un premier ensemble de champs magnétiques au moyen du compas magnétique (10) dans un premier état général de l'appareil de mesure (1) dans lequel l'appareil de mesure (1) prend un premier état de fonctionnement et un premier état d'utilisation,
   - déterminer (114) un premier ensemble de paramètres sur la base du premier ensemble de champs magnétiques,
   - mesurer (123) un deuxième ensemble de champs magnétiques au moyen du compas magnétique (10) dans un deuxième état général de l'appareil de mesure (1) dans lequel l'appareil de mesure (1) prend un deuxième état de fonctionnement et le premier état d'utilisation, et
   - déterminer (124) un deuxième ensemble de paramètres sur la base du deuxième ensemble de champs magnétiques,
   **caractérisé par** les étapes consistant à :

   - mesurer (133) un troisième ensemble de champs magnétiques au moyen du compas magnétique (10) dans un troisième état général de l'appareil de mesure (1) dans lequel l'appareil de mesure (1) prend le premier état de fonctionnement et un deuxième état d'utilisation,
   - déterminer (134) un troisième ensemble de paramètres sur la base du troisième ensemble de champs magnétiques,
   - déduire (145) un quatrième ensemble de paramètres sur la base du premier, du deuxième et du troisième ensemble de paramètres, et
   - stocker (150) le premier, le deuxième, le troisième et le quatrième ensemble de paramètres dans une mémoire de données,

   le quatrième ensemble de paramètres déduit correspondant à un ensemble de paramètres qui peut être déterminé sur la base d'un quatrième ensemble de champs magnétiques qui peut être mesuré dans un quatrième état général de l'appareil de mesure (1) dans lequel l'appareil de mesure (1) prend le deuxième état de fonctionnement et le deuxième état d'utilisation.

**12.** Procédé selon la revendication 11,
   **caractérisé en ce que**
   le champ magnétique perturbateur externe est provoqué par un montage de l'appareil sur un appareil externe (80, 81, 82), en particulier l'appareil externe (80, 81, 82) générant le champ magnétique perturbateur externe.

**13.** Procédé selon la revendication 11,
   **caractérisé en ce que**
   le champ magnétique perturbateur externe est provoqué par un changement d'état sur un appareil externe (80, 81, 82) sur lequel l'appareil est monté, en particulier l'appareil externe (80, 81, 82) générant le champ magnétique perturbateur externe.

**14.** Procédé selon l'une des revendications 11 à 13,
**caractérisé par**
une détection automatique du premier et du deuxième état de fonctionnement de l'appareil, en particulier présentant une détection

- d'un état actuel d'un système électrique de l'appareil, et/ou
- d'une position actuelle (44) d'un composant magnétique dur ou doux de l'appareil.

**15.** Produit programme d'ordinateur comportant un code de programme stocké sur un support lisible par machine pour la mise en œuvre du procédé selon la revendication 11 lorsque le programme est exécuté sur une unité électronique de traitement de données réalisée sous la forme d'un dispositif de compensation (50) de l'appareil de mesure (1) selon l'une des revendications 1 à 10.

Fig. 1

Fig. 2a

Fig. 2b

Fig. 3

Fig. 4a

13

11

1

10

44'

43

40

42

*Fig. 4b*

30

10

1

22

21

30

50

27

32

28

23

20

26

25

24

*Fig. 5*

Fig. 6a

Fig. 6b

EP 3 367 059 B1

Fig. 7a

Fig. 7b

Fig. 8

Fig. 9a

100

Gerät im ersten Anwendungszustand 111 → Gerät im ersten Betriebszustand 112 → 1. Magnetfeld messen 113 → 1. Parametersatz bestimmen 114

Gerät im ersten Anwendungszustand 121 → Gerät im zweiten Betriebszustand 122 → 2. Magnetfeld messen 123 → 2. Parametersatz bestimmen 124

Gerät im zweiten Anwendungszustand 131 → Gerät im ersten Betriebszustand 132 → 3. Magnetfeld messen 133 → 3. Parametersatz bestimmen 134

Gerät im zweiten Anwendungszustand 141 → Gerät im zweiten Betriebszustand 142 → 4. Magnetfeld Messen 143 → 4. Parametersatz Bestimmen 144

Speichern der Kompensationsdaten 150

Verwenden des Gerätes 200

Fig. 9b

**100**

Gerät im ersten Anwendungszustand **111** → Gerät im ersten Betriebszustand **112** → 1. Magnetfeld messen **113** → 1. Parametersatz bestimmen **114**

Gerät im ersten Anwendungszustand **121** → Gerät im zweiten Betriebszustand **122** → 2. Magnetfeld messen **123** → 2. Parametersatz bestimmen **124**

Gerät im zweiten Anwendungszustand **131** → Gerät im ersten Betriebszustand **132** → 3. Magnetfeld messen **133** → 3. Parametersatz bestimmen **134**

4. Parametersatz ableiten **145**

Speichern der Kompensationsdaten **150**

Verwenden des Gerätes **200**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7325320 B2
- US 4949089 A
- US 6401047 B1
- WO 2004099715 A2
- EP 2645059 A1
- DE 19609762 C1
- US 20150012234 A1
- EP 3249353 A1
- EP 0826137 B1